# EUROPEAN PATENT APPLICATION

(11) **EP 4 491 638 A1**
(43) Date of publication of application: **15.01.2025**
(21) Application number: 23766371.1
(22) Date of filing: 03.02.2023
(51) Int. Cl.: C08C 19/02, C08F 8/04, C08F 36/06, C08K 3/013, C08K 3/04, C08K 3/26, C08K 3/36, C08L 47/00

(54) **CONJUGATED DIENE POLYMER, CONJUGATED DIENE POLYMER COMPOSITION, AND CONJUGATED DIENE POLYMER CROSSLINKED PRODUCT**

(30) Priority: 10.03.2022 JP 2022037144
(71) Applicant: Asahi Kasei Kabushiki Kaisha, Tokyo 1000006 (JP)
(72) Inventor: YASUMOTO, Atsushi, Tokyo 100-0006 (JP); SHIOTSUKI, Kohei, Tokyo 100-0006 (JP); KONOMOTO, Tsuneaki, Tokyo 100-0006 (JP); TANIGUCHI, Naoki, Tokyo 100-0006 (JP); HAYATA, Daisuke, Tokyo 100-0006 (JP)
(74) Representative: Strehl Schübel-Hopf & Partner
(86) International application number: PCT/JP2023/003616
(87) International publication number: WO 2023/171191

(57) **Abstract**

Provided are a conjugated diene-based polymer, a conjugated diene-based polymer composition, and a crosslinked product of a conjugated diene-based polymer, etc. that have no problems in practical use with processability and heat resistance and are excellent in compression set and cold resistance. The present invention provides a conjugated diene-based polymer satisfying the following mathematical expression (A): mathematical expression (A): 35 (%) ≤ 100*(b + d) / (a + b + c + d) ≤ 99 (%) wherein constituent molar ratios of respective structure units represented by the following structural formulas (1) to (4) are defined as a, b, c, and d, respectively, having a Mooney viscosity at 100°C of 25 or more and 125 or less, having a glass transition temperature of -50°C or less measured by differential scanning calorimetry (DSC), and having a crystallization peak-derived heat of crystallization of 2.5 J/g or more and 50 J/g or less.

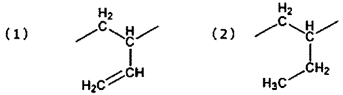

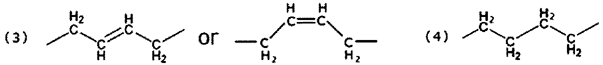

## Description

### Technical Field

The present invention relates a conjugated diene-based polymer, a conjugated diene-based polymer composition, and a crosslinked product of a conjugated diene-based polymer, etc.

### Background Art

Some electronic components have a specification to enclose perfluoroketone for the purpose of cooling and temperature-monitoring a battery storage portion. Thus, gasket materials are required to have sealing properties. The materials are also required to be sulfur-less and to have heat resistance for securing stable physical properties for a long period, in addition to having sealing properties. In such a case, rubber compositions using EPDM (ethylene-propylene-diene copolymer rubber) have been proposed.

A challenge to rubber itself is to satisfy both rubber hardness and cold resistance. For example, fuel cell vehicles need to be designed so as not to cause an undrivable state ascribable to freezing in any case such as start-up at low temperatures, running, or parking below freezing in a garage, and are therefore required to have cold resistance.

### Citation List

### Patent Literature

Patent Literature 1: Japanese Patent Laid-Open No. 2009-094056
Patent Literature 2: Japanese Patent Laid-Open No. 2011-249283

### Summary of Invention

### Technical Problem

However, conventionally proposed rubber compositions using EPDM have the difficulty in elevating a crosslinking density and also have the difficulty in obtaining sufficiently favorable compression set. Another challenge thereto is the difficulty in further improvement in cold resistance in terms of polymer design.

The present invention has been made in view of the above problems. An object of the present invention is to provide a conjugated diene-based polymer, a conjugated diene-based polymer composition, and a crosslinked product of a conjugated diene-based polymer, etc. that have no problems in practical use with processability and heat resistance and are excellent in compression set and cold resistance.

### Solution to Problem

The present inventors have made intensive studies in order to solve the above problems of the prior art, and as a result, have designed a conjugated diene-based polymer having a specified structure, thereby leading to completion of the present invention.

In other words, the present invention is as follows.
<1> A conjugated diene-based polymer
   satisfying the following mathematical expression (A) : 35 (%) ≤ 100*(b + d) / (a + b + c + d) ≤ 99 (%) wherein constituent molar ratios of respective structure units represented by the following structural formulas (1) to (4): 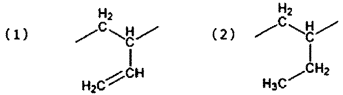 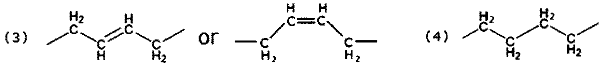 are defined as a, b, c, and d, respectively,
   having a Mooney viscosity at 100°C of 25 or more and 125 or less,
   having a glass transition temperature of -50°C or less measured by differential scanning calorimetry (DSC), and having a crystallization peak-derived heat of crystallization of 2.5 J/g or more and 50 J/g or less.
<2> The conjugated diene-based polymer according to <1>, wherein
   the conjugated diene-based polymer comprises 1.0% by mass or more and 8.0% by mass or less of an aromatic vinyl monomer unit.
<3> The conjugated diene-based polymer according to <1> or <2>, wherein
   the conjugated diene-based polymer satisfies the following mathematical expression (B): 90 (%) ≤ 100*b / (a + b) .
<4> The conjugated diene-based polymer according to any one of <1> to <3>, wherein
   the conjugated diene-based polymer satisfies the following mathematical expression (C): 100*(a + b) / (a + b + c + d) < 40 (%).
<5> The conjugated diene-based polymer according to any one of <1> to <4>, wherein
   the conjugated diene-based polymer has at least two peaks in a molecular weight distribution curve in gel permeation chromatography (GPC), and
   when a total area of the molecular weight distribution curve is defined as 100%, an area ratio of a peak (B) having the highest molecular weight among the peaks is 10% or more and 70% or less.
<6> The conjugated diene-based polymer according to any one of <1> to <5>, wherein
   the conjugated diene-based polymer has at least two peaks in a molecular weight distribution curve in gel permeation chromatography (GPC), and
   a mass proportion of a modified polymer in a polymer contained in a peak (A) having the lowest molecular weight among the peaks is 50% or more.
<7> The conjugated diene-based polymer according to any one of <1> to <6>, wherein
   a degree of modification is 5% or more and 99% or less.
<8> The conjugated diene-based polymer according to any one of <1> to <7>, wherein
   a tanδ peak top of viscoelasticity is -85°C or more and -40°C or less.
<9> The conjugated diene-based polymer according to any one of <1> to <8>, wherein
   the mathematical expression (A) is 90 (%) or less.
<10> The conjugated diene-based polymer according to any one of <1> to <9>, wherein
   the mathematical expression (A) is 50 (%) or more.
<11> The conjugated diene-based polymer according to any one of <1> to <10>, wherein
   a silicon content is 100 ppm or less.
<12> A conjugated diene-based polymer composition comprising
   100 parts by mass of the conjugated diene-based polymer according to any one of <1> to <11> and 10 parts by mass or more of a filling agent, wherein
   the filling agent comprises one or more selected from the group consisting of a silica-based inorganic filling agent, carbon black, and calcium carbonate.
<13> The conjugated diene-based polymer composition according to <12>, wherein
   the filling agent comprises at least the carbon black, and
   a mass proportion of the carbon black contained in the filling agent is 30% by mass or more.
<14> A crosslinked product of a conjugated diene-based polymer comprising
   a vulcanized composition of the conjugated diene-based polymer composition according to <12> or <13> and organic peroxide.

### Advantageous Effect of Invention

The present invention can provide a conjugated diene-based polymer, a conjugated diene-based polymer composition, and a crosslinked product of a conjugated diene-based polymer, etc. that have no problems in practical use with processability and heat resistance and are excellent in compression set and cold resistance.

### Description of Embodiments

Hereinafter, any embodiment for carrying out the present invention (hereinafter, referred to as "the present embodiment".) is described in detail. Herein, the following present embodiment is illustrative for describing the present invention, and the present invention is not limited thereto. In other words, the present invention can be arbitrarily modified and carried out without departing from the gist thereof. Herein, the term "to" flanked by numerical values or physical property values is used to include these values.

Herein, the "monomer" refers to a compound before polymerization and the "monomer unit" refers to a constituent unit constituting a polymer.

### [Conjugated diene-based polymer]

The conjugated diene-based polymer of the present embodiment satisfies the following mathematical expression (A): 35 (%) ≤ 100*(b + d) / (a + b + c + d) ≤ 99 (%) wherein molar ratios of respective structure units represented by the following structural formulas (1) to (4) are defined as a, b, c, and d, respectively.

### Structural formulas

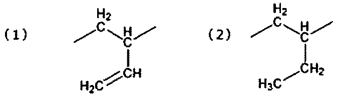

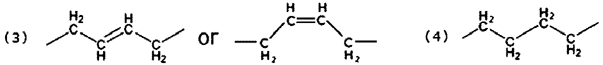

In the conjugated diene-based polymer of the present embodiment, the structure unit represented by the structural formula (1) corresponds to, for example, a 1,2-vinyl bond unit of a conjugated diene compound and is not limited by its raw material as long as the resulting structure unit is the same as the structure unit represented by the structural formula (1).

The molar ratio of the structure unit represented by the structural formula (1) is defined as a.

When the total value of the respective structure units represented by the structural formulas (1) to (4) is defined as 100% by mol, the molar ratio of a is preferably 0.0% by mol or more and 3.0% by mol or less, more preferably 0.2% by mol or more and 2.6% by mol or less, further preferably 0.4% by mol or more and 2.4% by mol or less. When the molar ratio of a falls within the above preferable range, the resulting vulcanized product tends to be excellent in breaking strength, fracture elongation, and ozone resistance.

In the conjugated diene-based polymer of the present embodiment, the structure unit represented by the structural formula (2) corresponds to, for example, a hydrogenated 1,2-vinyl bond unit of a conjugated diene compound and is not limited by its raw material as long as the resulting structure unit is the same as the structure unit represented by the structural formula (2).

The molar ratio of the structure unit represented by the structural formula (2) is defined as b.

When the total value of the respective structure units represented by the structural formulas (1) to (4) is defined as 100% by mol, the molar ratio of b is preferably 2.0% by mol or more and 45.0% by mol or less, more preferably 3.0% by mol or more and 40.0% by mol or less, further preferably 5.0% by mol or more and 37.0% by mol or less, particularly preferably 10.0% by mol or more and 37.0% by mol or less. When the molar ratio of b falls within the above preferable range, the resulting vulcanized product tends to be excellent in breaking strength and fracture elongation.

In the conjugated diene-based polymer of the present embodiment, the structure unit represented by the structural formula (3) corresponds to, for example, a 1,4-cis bond unit and a 1,4-trans bond unit of a conjugated diene compound and is not limited by its raw material as long as the resulting structure unit is the same as the structure unit represented by the formula (3) .

The molar ratio of the structure unit represented by the structural formula (3) is defined as c.

When the total value of the respective structure units represented by the structural formulas (1) to (4) is defined as 100% by mol, the molar ratio of c is preferably 2.0% by mol or more and 60.0% by mol or less, more preferably 3.0% by mol or more and 50.0% by mol or less, further preferably 5.0% by mol or more and 40.0% by mol or less, particularly preferably 7.0% by mol or more and 30.0% by mol or less. When the molar ratio of c falls within the above preferable range, crosslinking ability in preparing a copolymer composition described below tends to be favorable.

The contents of 1,4-cis bond and 1,4-trans bond herein can be measured using ¹³C-NMR. Specifically, the contents can be measured by a method described in Examples below.

In the structure unit represented by the formula (3), the contents of 1,4-cis bond and 1,4-trans bond can be controlled within the numerical value range as described above by adjustment of the type of a polymerization initiator described below or the type or amount of addition of a polar compound.

In the conjugated diene-based polymer of the present embodiment, the structure unit represented by the structural formula (4) corresponds to, for example, a hydrogenated ethylene structure, or a hydrogenated 1,4-cis bond unit and 1,4-trans bond unit of a conjugated diene compound and is not limited by its raw material as long as the resulting structure unit is the same as the structure unit represented by the formula (4).

The molar ratio of the structure unit represented by the structural formula (4) is defined as d.

When the total value of the respective structure units represented by the structural formulas (1) to (4) is defined as 100% by mol, the molar ratio of d is preferably 5.0% by mol or more and 60.0% by mol or less, more preferably 10.0% by mol or more and 55.0% by mol or less, further preferably 15.0% by mol or more and 50.0% by mol or less, particularly preferably 20.0% by mol or more and 65.0% by mol or less. When the molar ratio of d falls within the above preferable range, the resulting vulcanized product tends to be excellent in breaking strength, fracture elongation, and ozone resistance.

The molar ratios a to d of the respective structure units represented by the structural formulas (1) to (4) can be measured by ¹H-NMR described in Examples below.

In the conjugated diene-based polymer of the present embodiment, the method for controlling the molar ratios a to d of the respective structure units represented by the structural formulas (1) to (4) within the above preferable range is not particularly limited, and examples thereof include a method including controlling the amount of 1,2-vinyl bond in a copolymer or controlling the degree of hydrogenation by the amount of addition of a polar substance during polymerization or a polymerization temperature.

The molar ratios a to d of the respective structure units represented by the structural formulas (1) to (4) satisfy the above mathematical expression (A). The mathematical expression (A) corresponds to, for example, a degree of hydrogenation of a conjugated diene monomer component.

The lower limit value of the mathematical expression (A) is preferably 35% or more, more preferably 45% or more, further preferably 50% or more, particularly preferably 55% or more, from the viewpoint of heat resistance. On the other hand, the upper limit value of the mathematical expression (A) is preferably 99% or less, more preferably 96% or less, further preferably 90% or less, particularly preferably less than 90%, from the viewpoint of ensuring crosslinking ability and reducing compression set.

### (Hydrogenation reaction)

The conjugated diene-based polymer of the present embodiment may be a hydrogenated copolymer. In this case, the conjugated diene-based polymer of the present embodiment can be obtained, for example, by hydrogenating a conjugated diene moiety described below.

The method including hydrogenating the conjugated diene moiety of a copolymer is not particularly limited, and a known method can be used. Preferrable examples of the method include a method including polymerization of the conjugated diene monomer or, if necessary, copolymerization thereof with other monomer according to anionic polymerization with various additives and conditions, and then hydrogenation of the resultant, as described in International Publication No. WO96/05250, Japanese Patent Laid-Open No. 2000-053706, International Publication No. WO2003/085010, International Publication No. WO2019/151126, International Publication No. WO2019/151127, International Publication No. WO2002/002663, or International Publication No. WO2015/006179.

The degree of hydrogenation in the hydrogenated conjugated diene-based polymer is a proportion (molar ratio) of a saturated bond formed by hydrogenation reaction of a double bond in a conjugated diene monomer unit-derived structure.

The degree of hydrogenation can be controlled within the above numerical value range by adjustment of the amount of addition of hydrogen, the reaction temperature, the reaction time, the type of a catalyst and the amount of addition of the catalyst.

The hydrogenation reaction may be a batch process or a continuous process or may be a combination thereof.

In a case where the conjugated diene-based polymer of the present embodiment is a hydrogenated copolymer, its degree of hydrogenation is preferably 35% or more and 98% or less, more preferably 40% or more and 98% or less, in terms of the degree of hydrogenation of a conjugated diene compound (for example, butadiene)-derived structure unit.

The degree of hydrogenation can be controlled by the amount of addition of hydrogen to a conjugated diene compound-derived structure unit.

The temperature of the hydrogenation reaction is not particularly limited and is preferably 60 to 105°C, more preferably 70 to 100°C.

The degree of hydrogenation can be measured by ¹H-NMR.

Herein, the molar ratios a to d of the respective structure units represented by the structural formulas (1) to (4) preferably satisfy the following mathematical expression (B): 90 (%) ≤ 100*b / (a + b) .

The mathematical expression (B) corresponds to, for example, a degree of hydrogenation of 1,2-vinyl bond in a conjugated diene monomer.

The mathematical expression (B) is preferably 90% or more, more preferably 92% or more, further preferably 94% or more, from the viewpoint of suppression of gel formation. The upper limit value side of the mathematical expression (B) is not particularly limited and is preferably 100% or less, more preferably less than 100%, further preferably 99% or less.

Also, the molar ratios a to d of the respective structure units represented by the structural formulas (1) to (4) preferably satisfy the following mathematical expression (C): 100*(a + b) / (a + b + c + d) < 40 (%).

The mathematical expression (C) is, for example, a content ratio of a 1,2-vinyl bond of a conjugated diene monomer and a butylene structure having a hydrogenated 1,2-vinyl bond and corresponds to an amount of 1,2-vinyl bond in a copolymer before hydrogenation.

The content of 1,2-vinyl bond can be controlled by a polymerization temperature during polymerization or the amount of addition of a polar compound described below. The amount of 1,2-vinyl bond in in a copolymer before hydrogenation can be measured by ¹H-NMR. In a case where a copolymer after hydrogenation is used as a sample, the content of 1,2-vinyl bond can also be measured by ¹H-NMR targeting a so-called amount of vinyl bond and amount of butylene bond.

The mathematical expression (C) is preferably less than 40%, more preferably 38% or less, further preferably 36% or less, from the viewpoint of low temperature characteristics. On the other hand, the mathematical expression (C) is preferably 15% or more, more preferably 17% or more, further preferably 20% or more, from the viewpoint of an improvement in productivity brought about by the shortening of a polymerization reaction time.

The respective structure units represented by the structural formulas (1) to (4) in the conjugated diene-based polymer of the present embodiment are preferably conjugated diene compound-derived structure units (hereinafter, also referred to as "conjugated diene monomers") or hydrogenated structure units thereof.

The conjugated diene monomer is not particularly limited, and examples thereof include 1,3-butadiene, isoprene, 2,3-dimethyl-1,3-butadiene, 1,3-pentadiene, 3-methyl-1,3-pentadiene, 1,3-hexadiene, and 1,3-heptadiene. In particular, 1,3-butadiene and isoprene are preferable and 1,3-butadiene is more preferable from the viewpoint of industrial availability. These may be used singly or in combinations of two or more kinds thereof.

The conjugated diene-based polymer of the present embodiment may also comprise an aromatic vinyl compound-derived structure unit (hereinafter, also referred to as "aromatic vinyl monomer").

The aromatic vinyl compound is not particularly limited, and examples thereof include styrene, o-methylstyrene, m-methylstyrene, p-methylstyrene, o,p-dimethylstyrene, o-ethylstyrene, m-ethylstyrene, p-ethylstyrene, α-methylstyrene, vinylethylbenzene, vinylxylene, vinylnaphthalene, and diphenylethylene. In particular, styrene is preferable from the viewpoint of industrial availability. These may be used singly or in combinations of two or more kinds thereof.

The conjugated diene-based polymer of the present embodiment is preferably a hydrogenated product of a copolymer of a conjugated diene compound and an aromatic vinyl compound (hereinafter, also referred to as "conjugated diene-aromatic vinyl copolymer").

In the conjugated diene-based polymer of the present embodiment, the content of the aromatic vinyl monomer unit is preferably 1.0% by mass or more, more preferably 1.5% by mass or more, further preferably 2.0% by mass or more, from the viewpoint of the breaking strength and tear strength of a vulcanized product. On the other hand, the content of the aromatic vinyl monomer unit is preferably 14.0% by mass or less, more preferably 10.0% by mass or less, further preferably 8.0% by mass or less, particularly preferably 7.0% by mass or less, from the viewpoint of crosslinking ability in preparing a vulcanized product, compression set, and low temperature characteristics.

The content of the aromatic vinyl monomer unit in the copolymer of the present embodiment can be controlled within the above numerical value range by adjustment of, for example, the amount of the aromatic vinyl monomer added in the polymerization step.

Herein, the content of the aromatic vinyl monomer unit can be measured using ¹H-NMR. Specifically, the content is measured according to a method described in Examples below.

In a case where the conjugated diene-based polymer of the present embodiment is a hydrogenated product of a conjugated diene-aromatic vinyl copolymer, a larger proportion of the aromatic vinyl monomer unit present alone is more preferable from the viewpoint of an improvement in wear resistance.

The content of the aromatic vinyl monomer block in the conjugated diene-based polymer is less than 5.0% by mass, preferably 4.0% by mass or less, more preferably 3.5% by mass or less, further preferably 3.0% by mass or less, particularly preferably 2.0% by mass or less, from the viewpoint of wear resistance.

The "aromatic vinyl monomer block" herein means a chain structure of eight or more aromatic vinyl monomer units.

The method for measuring the aromatic vinyl monomer block is not particularly limited, and examples thereof include a known method as described in International Publication No. WO2014/133097, for example, measurement of a chain of styrene units with NMR. Examples of other method include a method including using a conjugated diene-based polymer before hydrogenation as a specimen, decomposing the polymer according to the Kolthoff method (method described in I. M. KOLTHOFF, et al., J. Polym. Sci. 1,429 (1946)), and analyzing the amount of polystyrene insoluble in methanol.

In this case, the resulting vulcanized rubber is preferable, particularly, from the viewpoint of wear resistance and cold resistance.

### [Glass transition temperature]

The glass transition temperature of the conjugated diene-based polymer of the present embodiment is -50°C or less, preferably -60°C or less, from the viewpoint of cold resistance. In a case where the glass transition temperature is on the order of -60°C, the conjugated diene-based polymer is applicable to applications in which EPDM or the like of cold resistance grade is used. The glass transition temperature is more preferably -63°C or less, further preferably -65°C or less, particularly preferably -68°C or less, from the viewpoint of improving characteristics at low temperatures for use in applications such as hydrogen tanks or packings for fuel cell vehicles.

When the glass transition temperature is -60°C or less, the resulting rubber is generally superior in cold resistance to EPDM. Use of this conjugated diene-based polymer can produce a conjugated diene-based polymer composition excellent in cold resistance.

On the other hand, the glass transition temperature is preferably -90°C or more, more preferably -90°C or more, further preferably -87°C or more, particularly preferably -85°C or more, from the viewpoint of maintaining ozone resistance.

The glass transition temperature of the conjugated diene-based polymer can be controlled within the above range by adjustment of, for example, the content of the aromatic vinyl monomer unit, the value of the mathematical expression (A), the amount of vinyl bond, or the degree of hydrogenation.

In general, the conjugated diene-based polymer tends to have a higher glass transition temperature with increase in content of the aromatic vinyl monomer unit and tends to have a higher glass transition temperature with increase in content of the structure unit represented by the structural formula (4). On the other hand, the hydrogenated conjugated diene-based polymer tends to have a lower glass transition temperature with increase in degree of hydrogenation of 1,2-vinyl bond.

In a case where the glass transition temperature of the conjugated diene-based polymer is controlled to, for example, -50°C or less, the content of the aromatic vinyl monomer unit is preferably 15% by mass or less, the amount of 1,2-vinyl bond is preferably 20% by mol or more and 45% by mol or less, and the degree of hydrogenation is preferably 35% or more and 98% or less. In the case of a conjugated diene-based polymer having a degree of hydrogenation of 90% or more and a glass transition temperature of -60°C or less, the content of the aromatic vinyl monomer unit is preferably 10% by mass or less.

In a case where the glass transition temperature of the conjugated diene-based polymer is controlled to, for example, -60°C or less, the content of the aromatic vinyl monomer unit is preferably 8% by mass or less, the amount of 1,2-vinyl bond is preferably 20% by mol or more and 40% by mol or less, and the degree of hydrogenation is preferably 35% or more and 98% or less. In the case of a conjugated diene-based polymer having a degree of hydrogenation of 90% or more and a glass transition temperature of -60°C or less, the content of the aromatic vinyl monomer unit is preferably 6% by mass or less.

In a case where the glass transition temperature of the conjugated diene-based polymer is controlled to, for example, -70°C or less, the content of the aromatic vinyl monomer unit is preferably 6% by mass or less, the amount of 1,2-vinyl bond is preferably 20% by mol or more and 40% by mol or less, and the degree of hydrogenation is preferably 35% or more and 85% or less.

In a case where the glass transition temperature of the conjugated diene-based polymer is controlled to, for example, -80°C or less, the content of the aromatic vinyl monomer unit is preferably 6% by mass or less, the amount of 1,2-vinyl bond is preferably 20% by mol or more and 40% by mol or less, and the degree of hydrogenation is preferably 35% or more and 70% or less.

When the glass transition temperature of the conjugated diene-based polymer falls within the above preferable range, a conjugated diene-based polymer composition or a crosslinked product of a conjugated diene-based polymer, which is obtained using the conjugated diene-based polymer, tends to be excellent in fracture characteristics at low temperatures and to have small temperature dependence of rigidity at or around room temperature and high stability.

The glass transition temperature is defined as the glass transition temperature at the glass transitionderived peak top (Inflection point) of the resulting DSC differential curve of a DSC curve recorded with a temperature rise in a predetermined temperature range, according to ISO 22768: 2006. Specifically, the glass transition temperature can be measured by a method described in Examples below.

### [Heat of crystallization]

The conjugated diene-based polymer of the present embodiment has microcrystallinity. The heat of crystallization of a crystallized portion can be measured as the index of microcrystallinity using DSC (differential scanning calorimetry). The heat of crystallization of the conjugated diene-based polymer of the present embodiment is 2.5 J/g or more and 50 J/g or less. The heat of crystallization is preferably 48 J/g or less, further preferably 45 J/g or less, particularly preferably 40 J/g or less, from the viewpoint of suppressing deposition from a solvent during polymerization and improving processability and cold resistance. On the other hand, the heat of crystallization is 2.5 J/g or more, preferably 3.0 J/g or more, more preferably 4.0 J/g or more, further preferably 5.0 J/g or more, from the viewpoint of compression set. The heat of crystallization of the conjugated diene-based polymer is determined from the crystallization-derived peak area of the resulting DSC differential curve of a DSC curve recorded with a temperature drop in a predetermined temperature range, according to ISO 22768: 2006. Specifically, the heat of crystallization can be measured by a method described in Examples below.

The heat of crystallization of the conjugated diene-based polymer can be controlled within the above range by, for example, the content of the aromatic vinyl monomer unit, the value of the mathematical expression (A), the amount of vinyl bond, or the degree of hydrogenation. Particularly, the heat of crystallization tends to be higher with decrease in content of the structure unit represented by the structural formula (1) and the structure unit represented by structural formula (2) and with increase in content of the structure unit represented by the structural formula (4). Specifically, in a case where the content of the aromatic vinyl monomer unit is 5% by mass and the total content of the structure unit represented by the structural formula (1) and the structure unit represented by the structural formula (2) is 35% by mol, the content of the structure unit represented by the structural formula (4) is preferably 30% by mol or more and 63% by mol or less. In a case where the content of the aromatic vinyl monomer unit is 7% by mass and the total content of the structure unit represented by the structural formula (1) and the structure unit represented by the structural formula (2) is 25% by mol, the content of the structural formula (4) is preferably 25% by mol or more and 70% by mol or less.

The weight average molecular weight (Mw) of the conjugated diene-based polymer of the present embodiment is preferably 50000 or more and 1000000 or less, more preferably 80000 or more and 900000 or less, further preferably 120000 or more and 800000 or less, still more preferably 200000 or more and 700000 or less, from the viewpoint of favorable compression set.

The weight average molecular weight (Mw) of the conjugated diene-based copolymer of the present embodiment is also preferably within the above range from the viewpoint of adherence during production and the formability of a rubber bale.

The weight average molecular weight (Mw) can be controlled within the above numerical value range, for example, by a method including adjusting the amount of use of a polymerization initiator.

The weight average molecular weight (Mw) of the conjugated diene-based polymer of the present embodiment can be measured by GPC (gel permeation chromatography). Specifically, the weight average molecular weight can be measured by a method described in Examples below.

### [The number of peaks, peak area, and molecular weight distribution in GPC]

The conjugated diene-based polymer according to the present embodiment preferably has at least two peaks in a molecular weight distribution curve obtained by GPC measurement.

The peak in GPC according to the present embodiment has an area of 3.0% or more and a peak top when the total area of the molecular weight distribution curve obtained by GPC measurement is defined as 100%. The peak top is a point that takes the maximum value sandwiched between baselines or minimum values. Two or more peaks in GPC are preferable from the viewpoint of the balance among the processability, wear resistance, and strength of the conjugated diene-based polymer of the present embodiment.

In the case of having two or more peaks, a peak having the lowest molecular weight is defined as a peak (A) and a peak having the highest molecular weight is defined as a peak (B).

The peak molecular weight at the peak (A) is preferably 40000 to 500000 from the viewpoint of an improvement in processability and the prevention of adherence during production. The lower limit of the peak molecular weight at the peak (A) is more preferably 50000 or more, further preferably 60000 or more, particularly preferably 80000 or more. The upper limit of the peak molecular weight at the peak (A) is more preferably 450000 or less, further preferably 400000 or less, particularly preferably 360000 or less.

When the total area of the molecular weight distribution curve obtained by GPC measurement is defined as 100%, the area of thee peak (B) is preferably 10% or more and 70% or less, more preferably 20% or more and 68% or less, further preferably 24% or more and 65% or less, from the viewpoint of the suppression of cold flow.

The ratio of a modified polymer in a polymer contained in the peak (A) is preferably 50% to 99%, more preferably 55% to 98%. The ratio of the modified polymer in the peak (A) can be regarded as a degree of modification of the conjugated diene-based polymer in the peak (A). When the ratio of the modified polymer in the peak (A) is 50% or more, the balance between low hysteresis loss and wet skid properties and compression set are favorable. The ratio of 99% or less is preferable because of favorable processability.

The ratio of the modified polymer in a polymer contained in the peak (A) can be adjusted by controlling, for example, the type or amount of addition of a coupling agent or a modifying agent. Examples of the method for this purpose include a method including forming polymers by polymerization and reacting a monofunctional modifying agent with active ends of some of the polymers to form the peak (A) while reacting a difunctional or more coupling agent with the remaining polymers to obtain a polymer corresponding to the peak (B), and a method including adding a difunctional or more modifying agent and then adding a monofunctional modifying agent.

The ratio of the modified polymer in a polymer contained in the peak (A) can also be adjusted by modifying a polymerization initiation end with amine. The method including modifying a polymerization initiation end in a conjugated diene moiety of a copolymer with amine is not particularly limited, and a known method can be used. Preferrable examples of the method include a method including adding an organic lithium compound as a polymerization initiator in the presence of an amine compound having active hydrogen to obtain a polymer chain having a nitrogen atom at a molecular end, as described in Japanese Patent Laid-Open No. 2018-16678. Examples of the amine compound having active hydrogen include piperidine, hexamethylene, azacyclooctane, 1,3,3-trimethyl-6-azabicyclo[3.2.1]octane, 1,2,3,6-tetrahydropyridine, and 3,5-dimethylpiperidine.

The molecular weight distribution (weight average molecular weight Mw/number average molecular weight Mn) of the conjugated diene-based polymer of the present embodiment is preferably 1.2 to 3.0, more preferably 1.2 to 2.5, from the viewpoint of processability and bale hardness.

The Mooney viscosity (ML₁₊₄) at 100°C of the conjugated diene-based polymer of the present embodiment obtained using an L-type rotor is 25 or more and 125 or less, preferably 28 or more and 120 or less, more preferably 30 or more and 118 or less, from the viewpoint of processability and compression set.

The Mooney viscosity of the conjugated diene-based polymer of the present embodiment can be measured by a method described in Examples below.

The Mooney viscosity (ML₁₊₄) at 100°C of the conjugated diene-based polymer obtained using an L-type rotor can be controlled by, for example, the molecular weight or degree of hydrogenation of the conjugated diene-based polymer. Specifically, the Mooney viscosity can often be controlled within the above range as long as the weight average molecular weight Mw is 200000 or more and 1000000 or less.

The Mooney viscosity tends to be higher with increase in degree of hydrogenation. Therefore, in the case of the degree of hydrogenation of 70% or more, the weight average molecular weight Mw is preferably 100000 or more and 500000 or less. In the case of the degree of hydrogenation of 50% or more, the weight average molecular weight Mw is preferably 200000 or more and 800000 or less.

### [Dynamic viscoelasticity]

The tanδ peak top temperature of the conjugated diene-based polymer of the present embodiment, when the dynamic viscoelasticity is measured and the temperature dependence of tanδ is measured, is preferably -85°C or more and -40°C or less.

For reducing the temperature dependence of physical properties in material design and ensuring physical property stability in a usage environment, the tanδ is preferably -40°C or less, more preferably -43°C or less, further preferably -45°C or less. On the other hand, for crosslinking the conjugated diene-based polymer, it is necessary to control the amount of double bond. Therefore, the tanδ tends to be -85°C or more for material design.

The tanδ peak top temperature can be controlled by, for example, the content of the aromatic vinyl monomer unit in the conjugated diene-based polymer, the content of the structure unit represented by the structural formulas (1) to (4), or the degree of hydrogenation.

### [Silicon content]

The silicon content of the conjugated diene-based polymer of the present embodiment is preferably 30 ppm or more, more preferably 33 ppm or more, further preferably 35 ppm or more, from the viewpoint of the suppression of cold flow. On the other hand, the silicon content is preferably 200 ppm or less, more preferably 100 ppm or less, further preferably 80 ppm or less, from the viewpoint of processability.

The silicon content can be controlled within the above numerical value range by adjustment of, for example, the amount of addition or type of a coupling agent described below or a modifying agent having a nitrogen atom-containing group.

### [Amount of titanium and amount of aluminum]

In a case where titanium is used as a hydrogenation catalyst component in the production of the conjugated diene-based polymer of the present embodiment, the amount of titanium added is preferably 150 ppm or less based on a conjugated diene-based polymer before hydrogenation.

The content of titanium in the conjugated diene-based polymer is preferably 1 ppm or more and 100 ppm or less, more preferably 5 ppm or more and 90 ppm or less, further preferably 10 ppm or more and 80 ppm or less. A content of 100 ppm or less can allow for prevention of yellowing of the conjugated diene-based polymer, and a content of 1 ppm or more eliminates the need for removal facilities and can reduce the cost.

In a case where aluminum is used as a hydrogenation catalyst component in the production of the conjugated diene-based polymer of the present embodiment, the amount of aluminum added is preferably 6 ppm or less, more preferably 3 ppm or less, further preferably no addition, based on a conjugated diene-based polymer before hydrogenation.

The aluminum content of the conjugated diene-based polymer of the present embodiment is preferably 2 ppm or less, further preferably 1 ppm or less, and no aluminum is further preferably contained, in consideration of a reduction in safety of the catalyst in hydrogenation reaction. Not aluminum, but lithium and/or magnesium can be utilized, and thus the function of aluminum as a cocatalyst can be compensated.

The hydrogenation catalyst added in production of the hydrogenated conjugated diene-based polymer preferably contains aluminum at a content of 0.05 mol or less, more preferably aluminum at a content of 0.04 mol or less, further preferably aluminum at a content of 0.03 mol or less, per mol of titanium, particularly preferably contains no aluminum, from the viewpoint of suppression of an increase in Mooney viscosity (ML viscosity), and handleability and safety of the hydrogenation catalyst.

The titanium content and the aluminum content of the hydrogenated conjugated diene-based polymer can be controlled within the above numerical value ranges by adjustment of the titanium content and the aluminum content of the hydrogenation catalyst.

### [Nitrogen content]

The nitrogen content in the conjugated diene-based polymer of the present embodiment is preferably 60 to 600 ppm, more preferably 80 to 500 ppm, from the viewpoint of an improvement in dispersibility of a filler when the conjugated diene-based polymer is prepared into a composition.

### [Coupled copolymer]

The conjugated diene-based polymer of the present embodiment is preferably a coupled copolymer obtained by coupling reaction using a bifunctional or more reactive compound (hereinafter, also referred to as "coupling agent") for an active end of a copolymer obtained through a polymerization step and, if necessary, a branching step using a branching agent.

In the coupling step of performing coupling reaction using a coupling agent, the coupling reaction is caused at one active end of a copolymer with a predetermined coupling agent or a modifying agent having a nitrogen atom-containing group to obtain a copolymer.

### (Coupling agent)

In the present embodiment, the coupling agent that can be used in the coupling step may have any structure as long as the coupling agent is a bifunctional or more reactive compound.

The conjugated diene-based copolymer of the present embodiment preferably contains a nitrogen atom. The conjugated diene-based copolymer containing a nitrogen atom can be obtained, for example, by coupling reaction using a modifying agent having a nitrogen atom-containing group described below.

### (Modifying agent having nitrogen atom-containing group)

The conjugated diene-based polymer of the present embodiment may be a conjugated diene-based polymer obtained as follows: an active end of a polymer obtained through a polymerization step and, if necessary, a branching step is subjected to coupling reaction using a bifunctional or more reactive compound having a nitrogen atom-containing group (hereinafter, also referred to as "modifying agent having a nitrogen atom-containing group"), followed by a hydrogenation step.

In the coupling step, the coupling reaction is preferably caused at one active end of a conjugated diene-based polymer during polymerization using a coupling agent having a nitrogen atom-containing group.

The polymer coupled using the modifying agent having a nitrogen atom-containing group improves the dispersibility of a filler such as silica or carbon black in a conjugated diene-based polymer composition (rubber composition) obtained by blending with a filling agent or the like and offers favorable processability of the rubber composition obtained by blending with a filling agent or the like and favorable wear resistance and fracture strength of a vulcanized product of the rubber composition.

The nitrogen atom-containing coupling agent is preferably an isocyanate compound, an isothiocyanate compound, an isocyanuric acid derivative, a nitrogen group-containing carbonyl compound, a nitrogen group-containing vinyl compound, a nitrogen group-containing epoxy compound, or a nitrogen group-containing alkoxysilane compound, from the viewpoint of polymerization productivity and a high degree of modification.

The number of branches in the coupling agent is preferably larger from the viewpoint of a reduction in viscosity of a crosslinked product (for example, a crosslinked rubber composition) obtained using the conjugated diene-based polymer of the present embodiment and a reduction in cracking generation in a blended product sheet. The number of branches in the coupling agent is not particularly limited, and is preferably 3 branches or more, more preferably 4 branches or more from the viewpoint of an enhancement in processability. The upper limit of the number of branches is not particularly limited, and is preferably 30 branches or less from the viewpoint of productivity.

Such a nitrogen atom-containing coupling agent is preferably a nitrogen group-containing alkoxysilane compound or a nitrogen group-containing polyfunctional modifying agent from the viewpoint of reactivity.

Examples of the nitrogen group-containing alkoxysilane compound include, but not limited to the following, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy,2-methyl-1-(3-trimethoxysilylpropyl)-1-aza-2-silacyclopentane, 2-ethoxy,2-ethyl-1-(3-triethoxysilylpropyl)-1-aza-2-silacyclopentane, 2-methoxy,2-methyl-1-(3-dimethoxymethylsilylpropyl)-1-aza-2-silacyclopentane, 2-ethoxy,2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N-(3-(bis(3-(trimethoxysilyl)propyl)amino)propyl)-N-methyl-N'-(3-(methyl(3-(trimethoxysilyl)propyl)amino)propyl)-N'-(3-(trimethoxysilyl)propyl)-1,3-propanediamine.

Examples of the nitrogen group-containing polyfunctional modifying agent include, but not limited to the following, a compound having one or more functional groups selected from an epoxy group, a carbonyl group, a carboxylic acid ester group, a carboxylic acid amide group, an acid anhydride group, a phosphoric acid ester group, a phosphorus acid ester group, an epithio group, a thiocarbonyl group, a thiocarboxylic acid ester group, a dithiocarboxylic acid ester group, a thiocarboxylic acid amide group, an imino group, an ethyleneimino group, a halogen group, an alkoxysilyl group, an isocyanate group, a thioisocyanate group, a conjugated diene group, and an arylvinyl group, and having at least one nitrogen atom in the compound.

When the number of moles of such a functional group is calculated, such calculation should be made with one functionality in the case of an epoxy group, a carbonyl group, an epithio group, a thiocarbonyl group, an imino group, an ethyleneimino group, a halogen group, a conjugated diene group, an arylvinyl group, or an alkoxy group of an alkoxysilyl group, bi-functionality in the case of a carboxylic acid ester group, a carboxylic acid amide group, an acid anhydride group, a thiocarboxylic acid ester group, a dithiocarboxylic acid ester group, a thiocarboxylic acid amide group, an isocyanate group, or a thioisocyanate group, or trifunctionality in the case of each of a phosphoric acid ester group or a phosphorus acid ester group.

The polyfunctional modifying agent preferably usable in modification of the conjugated diene-based polymer of the present embodiment is a polyfunctional modifying agent where the total functionality of the functional group in one molecule is 2 or more, more preferably a polyfunctional modifying agent where the total functionality is 3 or more.

In a case where the hydrogenated conjugated diene-based polymer of the present embodiment is a modified polymer, not only the above coupling agent and modifying agent, but also a polyfunctional modifying agent described below, other than the nitrogen group-containing polyfunctional modifying agent and/or a nitrogen atom-free coupling agent described below can also be used.

Examples of the polyfunctional modifying agent include, but not limited to the following, polyglycidyl ethers of polyhydric alcohols, such as ethylene glycol diglycidyl ether and glycerin triglycidyl ether; polyglycidyl ethers of aromatic compounds having two or more phenyl groups, such as diglycidylated bisphenol A; polyepoxy compounds such as 1,4-diglycidyl benzene, 1,3,5-triglycidyl benzene, and polyepoxidized liquid polybutadiene; epoxy group-containing tert-amines such as 4,4'-diglycidyl-diphenylmethylamine and 4,4'-diglycidyldibenzylmethylamine, glycidylamino compounds such as diglycidylaniline, diglycidyl-o-toluidine, tetraglycidylm-xylenediamine, tetraglycidylaminodiphenylmethane, tetraglycidyl-p-phenylenediamine, diglycidylaminomethylcyclohexane, and tetraglycidyl-1,3-bisaminomethylcyclohexane; and compounds each having an epoxy group and other functional group, such as 3-glycidoxypropyltrimethoxysilane, 3-glycidoxypropyltriethoxysilane, 3-glycidoxypropyltributoxysilane, epoxy-modified silicone, epoxidized soybean oil, and epoxidized linseed oil.

Examples of the nitrogen atom-free coupling agent include, but not limited to the following, alkoxysilane compounds such as tetramethoxysilane, tetraethoxysilane, tetrabutoxysilane, and alkyl triphenoxysilane; halogenated silane compounds such as silicon tetrachloride, silicon tetrabromide, silicon tetraiodide, monomethyltrichlorosilicon, monoethyltrichlorosilicon, monobutyltrichlorosilicon, monohexyltrichlorosilicon, monomethyltribromosilicon, and bistrichlorosilylethane; and alkoxy halogenated silane compounds such as monochlorotrimethoxysilane, monobromotrimethoxysilane, dichlorodimethoxysilane, dibromodimethoxysilane, trichloromethoxysilane, and tribromomethoxysilane.

Examples of the nitrogen atom-free coupling agent include tin halide compounds such as tin tetrachloride, tin tetrabromide, monomethyltrichlorotin, monoethyltrichlorotin, monobutyltrichlorotin, monophenyltrichlorotin, and bistrichlorostanylethane; polyhalogenated phosphorus compounds such as trichlorophosphine and tribromophosphine; phosphorus acid ester compounds such as trisnonylphenyl phosphite, trimethyl phosphite, and triethyl phosphite; and phosphoric acid ester compounds such as trimethyl phosphate and triethyl phosphate.

An end modifying agent may also be used as the modifying agent which modifies the conjugated diene-based polymer of the present embodiment. Examples of the end modifying agent include, but not limited to the following, 1,3-diethyl-2-imidazolinone, 1,3-dimethyl-2-imidazolinone, 1,3-dipropyl-2-imidazolinone, 1-methyl-3-ethyl-2-imidazolinone, 1-methyl-3-propyl-2-imidazolinone, 1-methyl-3-butyl-2-imidazolinone, and 1,3-dihydro-1,3-dimethyl-2H-imidazol-2-one.

### (Degree of modification)

The "degree of modification" herein represents the mass proportion of a copolymer having a nitrogen atom-containing functional group based on the total amount of the conjugated diene-based polymer, unless otherwise specified.

For example, in a case where a nitrogen atom-containing modifying agent is reacted with the terminal end of a polymer, the mass proportion of a polymer having a nitrogen atom-containing functional group provided by the nitrogen atom-containing modifying agent to the total amount of the polymer is represented as the degree of modification.

On the other hand, in a case where polymer is branched with a nitrogen atom-containing branching agent, the formed copolymer also has a nitrogen atom-containing functional group. Thus, this branched polymer is also included in counting in the calculation of the degree of modification.

In other words, the "degree of modification" herein is the total mass proportion of a coupled polymer obtained with a modifying agent having a nitrogen atom-containing functional group and/or a branched polymer obtained with a branching agent having a nitrogen atom-containing functional group.

The degree of modification measured by a column adsorption GPC method (hereinafter, also simply referred to as "degree of modification") in the conjugated diene-based polymer of the present embodiment is preferably 5% or more and 99% or less based on the total amount of the conjugated diene copolymer from the viewpoint of the balance among processability, wear resistance, fracture strength, and compression set.

The degree of modification is more preferably 10% or more, further preferably 20% or more, particularly preferably 30% or more, especially preferably 40% or more. The upper limit of the degree of modification is not particularly limited and is, for example, 99% or less.

The degree of modification can be measured by, for example, chromatography that can separate a functional group-containing modified component from a nonmodified component.

Examples of the method using this chromatography include a method including using a column for gel permeation chromatography packed with a polar substance, such as silica, which adsorbs a specified functional group, as a filling agent, and performing quantification using an internal standard of a non-adsorbed component in comparison (column adsorption GPC method).

More specifically, the degree of modification can be determined by using a specimen solution containing a specimen and low-molecular weight internal standard polystyrene to measure a chromatogram with polystyrenebased gel column and a chromatogram with a silica-based column and then determine the difference between the chromatograms, and determining the amount of adsorption to the silica column, from the difference.

Further specifically, the degree of modification can be measured by a method described in Examples.

In the copolymer of the present embodiment, the degree of modification can be controlled by adjustment of, for example, the amount of addition of the modifying agent and a reaction method and can thereby be controlled to 5% or more and 99% or less.

As one example, the above degree of modification can be obtained, for example, by combining a polymerization method using an organic lithium compound having at least one nitrogen atom in a molecule described below as a polymerization initiator, a copolymerization method using a monomer having at least one nitrogen atom in a molecule, and a method using a modifying agent of a structural formula described below, and controlling polymerization conditions.

### [Method for producing conjugated diene-based polymer]

The conjugated diene-based polymer of the present embodiment is preferably obtained by carrying out a polymerization step using a predetermined polymerization initiator, preferably optionally carrying out a coupling reaction step using the above coupling agent, and then carrying out a hydrogenation step. Further preferably, a branching step using a branching agent may be carried out before the coupling reaction step.

### (Polymerization step)

At least an organic monolithium compound can be used as the polymerization initiator for use in the polymerization step.

Examples of the organic monolithium compound include, but not limited to the following, organic monolithium compounds of low molecular compounds or solubilized oligomers.

Examples of the organic monolithium compound also include compounds having a carbon-lithium bond, compounds having a nitrogen-lithium bond, and compounds having a tin-lithium bond, in terms of the binding mode between an organic group and lithium therein.

The amount of use of the organic monolithium compound as the polymerization initiator is preferably determined depending on the structure of a target copolymer and the molecular weight of the copolymer.

The amount of use of a monomer such as a conjugated diene compound based on the amount of use of the polymerization initiator is related to the degree of polymerization, that is, tends to be related to a number average molecular weight and/or a weight average molecular weight.

Thus, the amount of use of the polymerization initiator can be adjusted so as to be decreased for increasing the molecular weight while the amount of use of the polymerization initiator can be adjusted so as to be increased for decreasing the molecular weight.

The organic monolithium compound is preferably an alkyllithium compound having a substituted amino group, or dialkylaminolithium from the viewpoint of use as an approach of introducing a nitrogen atom to the conjugated diene-based polymer.

In this case, a copolymer having an amino groupderived nitrogen atom at a polymerization initiation end can be obtained.

The substituted amino group is an amino group having no active hydrogen or having a structure where active hydrogen is protected.

Examples of the alkyllithium compound having the amino group having no active hydrogen include, but not limited to the following, 3-dimethylaminopropyllithium, 3-diethylaminopropyllithium, 4-(methylpropylamino)butyllithium, and 4-hexamethyleneiminobutyllithium.

Examples of the alkyllithium compound having the amino group having a structure where active hydrogen is protected include, but not limited to the following, 3-bistrimethylsilylaminopropyllithium and 4-trimethylsilylmethylaminobutyllithium.

Examples of the dialkylaminolithium include, but not limited to the following, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenethylamide, lithium hexamethylenimide, lithium pyrrolidide, lithium piperidide, lithium heptamethylenimide, lithium morpholide, 1-lithioazacyclooctane, 6-lithio-1,3,3-trimethyl-6-azabicyclo[3.2.1]octane, and 1-lithio-1,2,3,6-tetrahydropyridine.

The organic monolithium compound having such a substituted amino group may be reacted with a small amount of a polymerizable monomer, for example, a monomer such as 1,3-butadiene, isoprene, or styrene, and used as an organic monolithium compound of a solubilized oligomer.

The organic monolithium compound is preferably an alkyllithium compound from the viewpoint of industrial availability and easy control of polymerization reaction. In this case, a copolymer having an alkyl group at a polymerization initiation end can be obtained.

Examples of the alkyllithium compound include, but not limited to the following, n-butyllithium, sec-butyllithium, tert-butyllithium, n-hexyllithium, benzyllithium, phenyllithium, and stilbenelithium.

The alkyllithium compound is preferably n-butyllithium and sec-butyllithium from the viewpoint of industrial availability and easy control of polymerization reaction.

These organic monolithium compounds may be used singly or in combinations of two or more kinds thereof. The organic monolithium compound may be used in combination with other organic metal compound(s).

Examples of the other organic metal compound include alkaline earth metal compounds, other alkali metal compounds, and other organic metal compounds.

Examples of the alkaline earth metal compound include, but not limited to the following, organic magnesium compounds, organic calcium compounds, and organic strontium compounds. Examples thereof also include alkoxide, sulfonate, carbonate, and amide compounds of alkaline earth metals.

Examples of the organic magnesium compound include dibutylmagnesium and ethylbutylmagnesium. Other examples of the organic metal compound include organic aluminum compounds.

In the polymerization step, examples of the polymerization reaction mode include, but not limited to the following, batch and continuous polymerization reaction modes.

In the continuous mode, one reactor or two or more connected reactors can be used. For example, a tank or tubular reactor equipped with a stirrer is used as a reactor for the continuous mode. In the continuous mode, preferably, a monomer, an inert solvent, and a polymerization initiator are continuously fed to the reactor, and a polymer solution containing a polymer is obtained in the reactor and continuously discharged.

For example, a tank reactor equipped with a stirrer is used as a reactor for the batch mode. In the batch mode, preferably, a monomer, an inert solvent, and a polymerization initiator are fed, if necessary, the monomer is continuously or intermittently additionally fed during polymerization, and a polymer solution containing a polymer is obtained in the reactor and discharged after the completion of polymerization.

In the method for producing the conjugated diene-based polymer of the present embodiment, the continuous mode capable of continuously discharging a polymer to be supplied to a next reaction in a short time is preferable for obtaining a copolymer having an active end at a high ratio.

In the polymerization step for the conjugated diene-based polymer, the polymerization is preferably performed in an inert solvent. The solvent is not particularly limited, and examples thereof include hydrocarbon solvents such as saturated hydrocarbons and aromatic hydrocarbons. Specific examples of the hydrocarbon solvent include, but not limited to the following, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons containing mixtures thereof.

A high concentration of a copolymer having an active end tends to be obtained by treating impurities allenes and acetylenes with an organic metal compound before polymerization reaction. This is preferable because a modified copolymer having a high degree of modification tends to be obtained.

In the polymerization step, a polar compound (polar substance) may be added. The polar compound can randomly copolymerize an aromatic vinyl compound and a conjugated diene compound and tends to be able to be also used as a vinylating agent for controlling the microstructure of a conjugated diene moiety. The polar compound tends to be also effective for accelerating polymerization reaction, for example.

The polar compound here used can be, but not limited to the following, for example, an ether compound such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, or 2,2-bis(2-oxolanyl)propane; a tert-amine compound such as tetramethylethylenediamine, dipiperidinoethane, trimethylamine, triethylamine, pyridine, or quinuclidine; an alkali metal alkoxide compound such as potassium-tert-amylate, potassium-tert-butyrate, sodium-tert-butyrate, or sodium amylate; or a phosphine compound such as triphenylphosphine.

These polar compounds may be used singly or in combinations of two or more kinds thereof.

The amount of use of the polar compound is not particularly limited, can be selected depending on the object and the like, and is preferably 0.01 mol or more and 10 mol or less per mol of the polymerization initiator.

Such a polar compound (vinylating agent) can be used, as an adjuster for the microstructure of a conjugated diene moiety in the polymer, in an appropriate amount according to the desired amount of 1,2-vinyl bond. Most of the polar compounds tend to have an effective randomization effect for the copolymerization of a conjugated diene compound and an aromatic vinyl compound and to be able to be used as an adjuster for the distribution of the aromatic vinyl compound and the amount of styrene block, at the same time.

For example, a method including initiating copolymerization reaction with the whole amount of styrene and an aliquot of 1,3-butadiene and intermittently adding the remaining amount of 1,3-butadiene during the copolymerization reaction, as described in Japanese Patent Laid-Open No. 59-140211, may be used as the method for randomizing a conjugated diene compound and an aromatic vinyl compound.

The polymerization temperature in the polymerization step is preferably a temperature at which living anion polymerization proceeds, and is more preferably 0°C or more, further preferably 120°C or less, from the viewpoint of productivity. The polymerization temperature within such a range tends to be able to sufficiently ensure the amount of reaction of a modifying agent with an active end after the completion of polymerization. The polymerization temperature is still further preferably 50°C or more and 100°C or less.

### (Coupling step)

The above coupling agent or modifying agent having a nitrogen atom-containing group is used to cause coupling reaction at an active end of a copolymer obtained through the above polymerization step, and, if necessary, a branching step using a predetermined branching agent.

### (Deactivator addition step and neutralizer addition step)

In the method for producing the conjugated diene-based polymer of the present embodiment, a deactivator, a neutralizer, and/or the like may also be, if necessary, added to a polymer solution after the coupling step.

Examples of the deactivator include, but not limited to the following, water; and alcohols such as methanol, ethanol, and isopropanol.

Examples of the neutralizer include, but not limited to the following, carboxylic acids such as stearic acid, oleic acid, and versatic acid (mixture of carboxylic acids having 9 to 11 carbon atoms, mainly having 10 carbon atoms, and having many branches); aqueous inorganic acid solutions, and carbon dioxide.

### (Hydrogenation step)

In the method for producing the conjugated diene-based polymer of the present embodiment, the above polymerization step and, if necessary, the branching step, the coupling step, and, if necessary, the deactivator addition step, are performed, and the above hydrogenation reaction may be carried out.

### (Stabilizer for rubber)

In the method for producing the conjugated diene-based polymer of the present embodiment, a stabilizer for rubber is preferably added from the viewpoint of preventing gel formation after polymerization and from the viewpoint of improving stability during processing.

The stabilizer for rubber is not limited to the following and any known stabilizer can be used, and preferable examples thereof include antioxidants such as 2,6-di-tert-butyl-4-hydroxytoluene (hereinafter, also designated as "BHT".), n-octadecyl-3-(4'-hydroxy-3',5'-di-tert-butylphenol)propionate, and 2-methyl-4,6-bis[(octylthio)methyl]phenol.

### (Solvent removal step)

In the method for producing the conjugated diene-based polymer of the present embodiment, a known method can be used as the method for acquiring the obtained conjugated diene-based polymer from the polymer solution. The method is not particularly limited, and examples thereof include a method including separating a solvent by steam stripping or the like, thereafter separating the polymer by filtration, and furthermore performing dewatering and drying to acquire the polymer, a method including concentration in a flushing tank and furthermore devolatilization by a vented extruder or the like, and a method including direct devolatilization by a drum dryer or the like.

### [Conjugated diene-based polymer composition]

The conjugated diene-based polymer composition (rubber composition) of the present embodiment contains 10 parts by mass or more of a filling agent based on 100 parts by mass of the above conjugated diene-based polymer of the present embodiment, and the filling agent contains at least one of a silica-based inorganic filling agent, carbon black, and calcium carbonate. The content of the filling agent is preferably 150 parts by mass or less based on 100 parts by mass of the above conjugated diene-based polymer of the present embodiment.

### [Filling agent]

The filling agent can include at least one of a silica-based inorganic filling agent, carbon black, and calcium carbonate. These may be used singly or in combinations of two or more kinds thereof. A filling agent other than those described above may be contained.

The mass proportion of the carbon black in the filling agent is preferably 30% by mass or more, more preferably 40% by mass or more, further preferably 50% by mass or more, from the viewpoint of strength and cost.

The content of the filling agent in the conjugated diene-based polymer composition of the present embodiment is preferably 10 parts by mass or more, more preferably 15 parts by mass or more, based on 100 parts by mass of the above copolymer of the present embodiment from the viewpoint of exerting a reinforcement effect. On the other hand, the content is preferably 150 parts by mass or less based on 100 parts by mass of the above copolymer of the present embodiment from the viewpoint of sufficient dispersion of the filling agent and sufficient processability and mechanical strength in practical use of the composition.

The silica-based inorganic filling agent is not particularly limited, known one can be used, a solid particle including SiO₂ or Si₃Al as a constituent unit is preferable, and a solid particle including SiO₂ or Si₃Al as a main component of a constituent unit is more preferable. The main component herein refers to a component contained in the silica-based inorganic filling agent at a content of 50% by mass or more, preferably 70% by mass or more, more preferably 80% by mass or more.

Specific examples of the silica-based inorganic filling agent include, but not limited to the following, silica, clay, talc, mica, diatomaceous earth, wollastonite, montmorillonite, zeolite, and inorganic fibrous substances such as glass fibers. Examples thereof also include silica-based inorganic filling agents subjected to surface hydrophobization, and mixtures of the silica-based inorganic filling agent and an inorganic filling agent other than the silica-based inorganic filling agent. In particular, the silica-based inorganic filling agent is preferably silica or glass fiber, more preferably silica from the viewpoint of strength and wear resistance, etc. Examples of the silica include dry silica, wet silica, and synthetic silicate silica.

Examples of the carbon black include, but not limited to the following, carbon black in each class, such as SRF, FEF, HAF, ISAF, and SAF. In particular, the carbon black preferably has a nitrogen adsorption specific surface area of 50 m²/g or more and an amount of dibutyl phthalate (DBP) oil absorption of 80 mL/100 g or less.

The content of the carbon black in the conjugated diene-based polymer composition of the present embodiment is preferably 5 parts by mass or more and 150 parts by mass or less, more preferably 10 parts by mass or more and 120 parts by mass or less, further preferably 15 parts by mass or more and 100 parts by mass or less, based on 100 parts by mass of the above copolymer of the present embodiment. The content of the carbon black within the above range is preferable from the viewpoint of breaking strength, compression set, and hardness.

The calcium carbonate is not particularly limited, and examples thereof include calcium carbonate having an average particle size of 0.04 µm to 8.0 µm and an amount of oil absorption of 10 to 35 g per 100 g of the calcium carbonate.

The filling agent can also include a filling agent other than the above filling agent, and examples thereof include metal oxide and metal hydroxide.

The metal oxide refers to a solid particle of a constituent unit mainly of chemical formula MₓO_{y} (M represents a metal atom, and x and y each independently represent an integer of 1 to 6).

Examples of the metal oxide include, but not limited to the following, alumina, titanium oxide, magnesium oxide, and zinc oxide.

Examples of the metal hydroxide include, but not limited to the following, aluminum hydroxide, magnesium hydroxide, and zirconium hydroxide.

The conjugated diene-based polymer composition (rubber composition) of the present embodiment may contain a silane coupling agent. The silane coupling agent has a function of tightening the interaction between a rubber component and the inorganic filling agent and has a group having affinity with or being bindable to each of the rubber component and the silica-based inorganic filling agent, and is preferably a compound having a sulfur-binding portion, and an alkoxysilyl group and a silanol group portion in one molecule. Such a compound is not particularly limited, and examples thereof include bis-[3-(triethoxysilyl)-propyl]-tetrasulfide, bis-[3-(triethoxysilyl)-propyl]-disulfide, and bis-[2-(triethoxysilyl)-ethyl]-tetrasulfide.

The content of the silane coupling agent in the conjugated diene-based polymer composition of the present embodiment is preferably 0.1 parts by mass or more and 30 parts by mass or less, more preferably 0.5 parts by mass or more and 20 parts by mass or less, further preferably 1.0 part by mass or more and 15 parts by mass or less, based on 100 parts by mass of the above inorganic filling agent. When the content of the silane coupling agent falls within the above range, the above effects brought about by the addition of the silane coupling agent tend to be able to be more remarkable.

### [Softener for rubber]

The conjugated diene-based polymer composition of the present embodiment may optionally contain a softener for rubber. The softener for rubber can be added, if necessary, in order to more improve the productivity of the conjugated diene-based polymer and the processability of a composition obtained by blending with the filling agent or the like.

The softener for rubber is not particularly limited, and examples thereof include spreading oil, liquid rubber, and resins.

The method for adding the softener for rubber to the conjugated diene-based polymer or the conjugated diene-based polymer composition is, but not limited to the following, preferably a method including adding and mixing the softener for rubber to and with a copolymer solution, to provide a polymer solution containing the softener for rubber, and performing solvent removal from the polymer solution.

Preferable examples of the spreading oil include aromatic oil, naphthene oil, and paraffin oil. In particular, alternative oil to aromatic oil is preferable, which contains 3% by mass or less of a polycyclic aromatic (PCA) component according to the IP346 method, from the viewpoint of environment safety and from the viewpoint of oil bleed prevention and wet grip properties. Examples of the alternative oil to aromatic oil include not only TDAE (Treated Distillate Aromatic Extracts) and MES (Mild Extraction Solvate) shown in Kautschuk Gummi Kunststoffe 52 (12) 799 (1999), but also RAE (Residual Aromatic Extracts).

Preferable examples of the liquid rubber include, but not limited to the following, liquid polybutadiene and liquid styrene-butadiene rubber.

The effect by addition of the liquid rubber tends not only to provide an improvement in processability of a conjugated diene-based polymer composition obtained by blending the conjugated diene-based polymer with the filling agent or the like, but to be able to shift the glass transition temperature of the conjugated diene-based polymer composition (rubber composition) to the lower temperature and to be able to improve the wear resistance, low hysteresis loss, and low temperature characteristics of a vulcanized product formed.

Preferable examples of the resin include, but not limited to the following, aromatic petroleum resins, coumarone-indene resins, terpene-based resins, rosin derivatives (including wood oil resins), tall oil, tall oil derivatives, rosin ester resins, natural and synthetic terpene resins, aliphatic hydrocarbon resins, aromatic hydrocarbon resins, mixed aliphatic-aromatic hydrocarbon resins, coumarin-indene resins, phenol resins, p-tert-butylphenol-acetylene resins, phenolformaldehyde resins, xylene-formaldehyde resins, monoolefin oligomers, diolefin oligomers, aromatic hydrocarbon resins, aromatic petroleum resins, hydrogenated aromatic hydrocarbon resins, cyclic aliphatic hydrocarbon resins, hydrogenated hydrocarbon resins, hydrocarbon resins, hydrogenated wood oil resins, hydrogenated oil resins, and esters of hydrogenated oil resins and monofunctional or multifunctional alcohols. These resins may be used singly or in combinations of two or more kinds thereof. In the case of hydrogenation, all unsaturated groups may be hydrogenated, or some unsaturated groups may remain.

The effect by addition of the resin tends not only to be able to improve the processability of a conjugated diene-based polymer composition (rubber composition) obtained by blending the copolymer with the filling agent or the like, but to be able to improve the fracture strength of a vulcanized product formed, and furthermore, tends to be able to shift the glass transition temperature of the conjugated diene-based polymer composition (rubber composition) to the higher temperature, thereby improving wet skid resistance.

The amount of addition of the spreading oil, the liquid rubber, or the resin as the softener for rubber is 1 part by mass or more and 60 parts by mass or less, preferably 5 parts by mass or more and 50 parts by mass or less, more preferably 10 parts by mass or more and 37.5 parts by mass or less, based on 100 parts by mass of the conjugated diene-based polymer of the present embodiment.

The softener for rubber, when added within the above range, tends to provide an improvement in processability of a conjugated diene-based polymer composition (rubber composition) obtained by blending the copolymer with the filling agent or the like and improvement in fracture strength and wear resistance of a vulcanized product formed.

### (Method for producing conjugated diene-based polymer composition (rubber composition))

Specific examples of the mixing method for obtaining the conjugated diene-based polymer composition (rubber composition) of the present embodiment include, but not limited to the following, a melt-kneading method with a common mixing machine such as an open roll, a Bunbury mixer, a kneader, a monoaxial screw extruder, a biaxial screw extruder, or a multiaxial screw extruder, and a method including dissolving and mixing each component, and then removing a solvent by heating.

In particular, a melt-kneading method with a roll, a Bunbury mixer, a kneader, or an extruder is preferable from the viewpoint of productivity and good kneading properties. Either a method including kneading the rubber component, the other filling agent, the silane coupling agent, and additives at once or a method including dividing and mixing such materials in multiple portions can also be applied.

### (Vulcanized composition)

The conjugated diene-based polymer composition (rubber composition) of the present embodiment may be subjected to vulcanization treatment with a vulcanizing agent to prepare a vulcanized composition.

Examples of the vulcanizing agent include, but not limited to the following, radical generators such as organic peroxide and azo compounds, oxime compounds, nitroso compounds, polyamine compounds, sulfur, and sulfur compounds.

Such sulfur compounds include sulfur monochloride, sulfur dichloride, disulfide compounds, and polymer polysulfide compounds. The content of the vulcanizing agent in the conjugated diene-based polymer composition (rubber composition) of the present embodiment is preferably 0.01 parts by mass or more and 20 parts by mass or less, more preferably 0.1 parts by mass or more and 15 parts by mass or less, based on 100 parts by mass of the rubber component. A conventionally known method can be applied to the vulcanization method. The vulcanization temperature is preferably 120°C or more and 200°C or less, more preferably 140°C or more and 180°C or less.

For the vulcanization, a vulcanization accelerator may be used, if necessary.

A conventionally known material can be used as the vulcanization accelerator, and examples include, but not limited to the following, sulfenamide-based, guanidine-based, thiuram-based, aldehyde-amine-based, aldehyde-ammonia-based, thiazole-based, thiourea-based, and dithiocarbamate-based vulcanization accelerators. Examples of the vulcanization aid include, but not limited to the following, zinc flower, stearic acid, and triallyl isocyanurate. The content of the vulcanization accelerator is preferably 0.01 parts by mass or more and 20 parts by mass or less, more preferably 0.1 parts by mass or more and 15 parts by mass or less, based on 100 parts by mass of the rubber component.

Examples of the organic peroxide can include 1,3-bis(tert-butylperoxyisopropyl)benzene, 2,5-dimethyl-2,5-bis(tert-butylperoxy)hexine-3, 2,5-dimethyl-2,5-bis(tert-butylperoxy)hexene-3, 2,5-dimethyl-2,5-bis(tert-butylperoxy) hexane, 2,2'-bis(tert-butylperoxy)-p-isopropylbenzene, dicumyl peroxide, di-tert-butyl peroxide, tert-butyl peroxide, p-menthane peroxide, 1,1-bis(tert-butylperoxy)-3,3,5-trimethylcyclohexane, dilauroyl peroxide, diacetyl peroxide, tert-butyl peroxybenzoate, 2,4-dichlorobenzoyl peroxide, p-chlorobenzoyl peroxide, benzoyl peroxide, di(tert-butylperoxy)perbenzoate, n-butyl-4,4-bis(tert-butylperoxy) valerate, and tert-butyl peroxyisopropylcarbonate.

### (Other additives)

The conjugated diene-based polymer composition (rubber composition) of the present embodiment may contain various additives other than those described above, such as other softener and filling agent, and a heat-resistant stabilizer, an antistatic agent, a weathering stabilizer, an anti-aging agent, a colorant, and a lubricant, as long as the objects of the present embodiment are not impaired.

A known softener can be used as such other softener.

Such other filling agent is not particularly limited, and specific examples thereof include magnesium carbonate, aluminum sulfate, and barium sulfate. The above heat-resistant stabilizer, antistatic agent, weathering stabilizer, anti-aging agent, colorant, and lubricant here used can be each known material.

### [Application of crosslinked product of conjugated diene-based polymer (crosslinked rubber composition)]

The crosslinked product of a conjugated diene-based polymer (crosslinked rubber composition) of the present embodiment can be used as, for example, a material for packings, gaskets, seal materials, vibration isolation rubber, vibration insulation rubber, conveyer belts, outsoles for shoes, midsoles for shoes, weather strip for automobiles, glass run, trunk lids, members for rail cars, members for aircrafts, waterproof sheets, engine mounts, air springs, rubber gloves, medical and sanitary goods, hoses for industrial and various applications, battery cases, adhesives, wire coverings, window frame rubber, rubber rolls, rubber rollers for OA equipment, spinning, or the like, keypads, keyboard covers, hydroscopes, swimming caps, container bags, ocean-related components, interior floor materials, artificial muscle materials, and various industrial products. The crosslinked product of a conjugated diene-based polymer (crosslinked rubber composition) of the present embodiment can be formed to provide various formed products in these applications.

### Examples

Hereinafter, the present embodiment is described in more detail with reference to specific Polymerization Examples, Examples and Comparative Examples, but the present embodiment is not limited by the following Polymerization Examples, Examples and Comparative Examples at all.

Various physical properties in Polymerization Examples, Examples and Comparative Examples were measured by methods shown below.

### [Methods for measuring physical properties]

### [The number of peaks]

The weight average molecular weight (Mw) was determined based on the calibration curve with standard polystyrene, by measuring a chromatogram with a GPC measurement apparatus where three columns each including polystyrene-based gel as a filling agent were connected. Specific measurement conditions are shown below. Twenty µL of the following measurement liquid was injected to the GPC measurement apparatus to perform such measurement.

### (Measurement conditions)

Apparatus: trade name "HLC-8320GPC" manufactured by Tosoh Corporation
Eluent: 5 mmol/L triethylamine-containing tetrahydrofuran (THF)
Guard column: trade name "TSK guard column Super H-H" manufactured by Tosoh Corporation
Separation column: trade names "TSK gel Super H5000", "TSK gel Super H6000", and "TSK gel Super H7000" manufactured by Tosoh Corporation, connected in the listed order.
Oven temperature: 40°C
Flow rate: 0.6 mL/min
Detector: RI detector (trade name "HLC8020" manufactured by Tosoh Corporation)
Measurement liquid: measurement solution of 10 mg of each measurement specimen dissolved in 20 mL of THF

### [Degree of modification]

The degree of modification was measured as follows according to a column adsorption GPC method, by use of the property of a modified polymer to adsorb to a column.

The degree of modification was determined using a specimen solution containing a specimen and low-molecular weight internal standard polystyrene to measure a chromatogram with a column packed with polystyrene-based gel and a chromatogram with a column packed with silica-based gel and then determine the difference between the chromatograms, and determining the amount of adsorption to the silica-based column, from the difference.

### (GPC measurement conditions with polystyrene-based column)

GPC measurement conditions with the polystyrene-based column are shown below. Twenty µL of the following measurement liquid was injected to the GPC measurement apparatus to perform such measurement.
Apparatus: trade name "HLC-8320GPC" manufactured by Tosoh Corporation
Eluent: 5 mmol/L triethylamine-containing THF
Guard column: trade name "TSK guard column Super H-H" manufactured by Tosoh Corporation
Column: trade names "TSK gel Super H5000", "TSK gel Super H6000", and "TSK gel Super H7000" manufactured by Tosoh Corporation, connected in the listed order
Oven temperature: 40°C
Flow rate: 0.6 mL/min
Detector: RI detector (HLC8020 manufactured by Tosoh Corporation)
Measurement liquid: specimen solution obtained by dissolving 10 mg of specimen and 5 mg of standard polystyrene in 20 mL of THF.

### (GPC measurement conditions with silica-based column)

GPC measurement conditions with the silica-based column are shown below. Fifty µL of the following measurement liquid was injected to the GPC measurement apparatus to perform such measurement.
Apparatus: trade name "HLC-8320GPC" manufactured by Tosoh Corporation
Eluent: THF
Guard column: trade name "DIOL 4.6 × 12.5 mm 5 micron" manufactured by GL Sciences Inc.
Separation column: trade names "Zorbax PSM-1000S", "PSM-300S", and "PSM-60S" manufactured by Agilent Technologies, connected in the listed order
Oven temperature: 40°C,
Flow rate: 0.5 mL/min
Detector: RI detector (HLC8020 manufactured by Tosoh Corporation)

### (Method for calculating degree of modification):

The degree of modification (%) was determined by the following expression, in which the peak area of the specimen was designated as P1 and the peak area of standard polystyrene was designated as P2 under the assumption that the entire peak area of the chromatogram with the polystyrene-based column was 100, and the peak area of the specimen was designated as P3 and the peak area of standard polystyrene was designated as P4 under the assumption that the entire peak area of the chromatogram with the silica-based column was 100. Degree of modification (%) = [1 - (P2 × P3)/(P1 × P4)] × 100 (wherein P1 + P2 = P3 + P4 = 100)

### (Degree of modification of peak (A))

Measurement was performed by the same method as the above method for measuring the degree of modification. Then, the degree of modification (%) was determined according to the following expression wherein based on 100 as the total peak area corresponding to the peak (A) in a chromatogram obtained using a polystyrene-based column, the peak area of a specimen was defined as P5 and the peak area of standard polystyrene was defined as P6; and based on 100 as the total peak area corresponding to the peak (A) in a chromatogram obtained using a silica-based column, the peak area of a specimen was defined as P7 and the peak area of standard polystyrene was defined as P8. Degree of modification (%) = [1 - (P6 × P7) / (P5 × P8)] ×100 wherein P5 + P6 = P7 + P8 = 100.

### [Degree of coupling]

Each chromatogram was measured in the same manner as the method for measuring the weight average molecular weight, and the degree of coupling was calculated from the ratio between the peak area assigned to no coupling (peak at the lower molecular weight side) and the peak area assigned to coupling (peak at the higher molecular weight side).

### [Mooney viscosity]

The Mooney viscosity and the Mooney stress relaxation (degree of relaxation) of each polymer were measured with a Mooney viscometer (trade name "VR1132" manufactured by Ueshima Seisakusho Co., Ltd.), according to JIS K6300 (ISO289-1) and ISO289-4. The measurement temperature was 100°C.

Here, each specimen was preheated for 1 minute, thereafter a rotor was rotated at 2 rpm, and the torque after 4 minutes was measured and defined as the Mooney viscosity (ML₍₁₊₄₎).

### [Styrene content in conjugated diene-based polymer before hydrogenation, constituent molar ratio of respective structure units represented by structural formulas (1) to (4) in conjugated diene-based polymer, and degree of hydrogenation]

The aromatic vinyl monomer unit content was calculated from the integrated value with respect to an unsaturated bond moiety of a polymer before hydrogenation, by ¹H-NMR measurement.

Next, a large amount of methanol was added to a reaction liquid after hydrogenation reaction, thereby precipitating and recovering the polymer. Next, the polymer was extracted with acetone, and dried in vacuum. The polymer was used as a sample for ¹H-NMR measurement, and the degree of hydrogenation was measured. ¹H-NMR measurement conditions are noted below.

### (Measurement conditions)

Measurement equipment: JNM-LA400 (manufactured by JEOL Ltd.)
Solvent: deuterated chloroform
Measurement sample: each sample extracted before and after hydrogenation of polymer
Sample concentration: 50 mg/mL
Observation frequency: 400 MHz
Chemical shift reference: TMS (tetramethylsilane)
Pulse delay: 2.904 seconds
Number of scanning times: 64
Pulse width: 45°
Measurement temperature: 26°C

### [Styrene block content]

A chain where 8 or more styrene structure units were linked was defined as a styrene block, and the styrene block content was determined as follows.

The proportion of the integrated value in the range of each chemical shift (S) of the following (X) was determined from a ¹H-NMR spectrum at 400 MHz measured with deuterated chloroform as a solvent, and the content of the styrene block contained in each polymer was determined. (X) Chain with 8 or more aromatic vinyl compound units: 6.00 ≤ S < 6.68

### [Glass transition temperature]

A conjugated diene-based polymer was used as a specimen to perform measurement according to ISO22768: 2006. A dedicated aluminum pan was packed with 10 mg of a sample, and the measurement apparatus used was a differential scanning calorimeter DSC7020 manufactured by Hitachi High-Tech Science Corporation. The sample was heated from 30°C to 160°C at 20°C/min and kept for 2 minutes, followed by a temperature drop from 160°C to - 120°C at 10°C/min and a subsequent temperature rise from -120°C to 160°C at 10°C/min, while a DSC curve was recorded. The glass transition-derived peak top (Inflection point) of the DSC differential curve of the conjugated diene-based polymer in the temperature rise from -120°C to 160°C was regarded as the glass transition temperature.

### [Heat of crystallization]

A conjugated diene-based polymer was used as a specimen to perform measurement according to ISO22768: 2006. A dedicated aluminum pan was packed with 10 mg of a sample, and the measurement apparatus used was a differential scanning calorimeter DSC7020 manufactured by Hitachi High-Tech Science Corporation. The sample was heated from 30°C to 160°C at 20°C/min and kept for 2 minutes, followed by a temperature drop from 160°C to - 120°C at 10°C/min and a subsequent temperature rise from -120°C to 160°C at 10°C/min, while a DSC curve was recorded. The heat of crystallization was determined from the crystallization-derived peak area of the conjugated diene-based polymer in the temperature drop from 160°C to-120°C.

### [tanδ peak top of viscoelasticity]

The dynamic viscoelasticity spectrum was measured by a method described below, and the peak top temperature of loss tangent (tanδ) was determined. The apparatus used was ARES manufactured by TA Instruments, and the tan6 peak top temperature was measured under conditions involving a sample thickness of 2 mm, a sample width of 10 mm, a sample length of 20 mm, a strain (initial strain) of 0.15%, a frequency of 1 Hz, a measurement range from -100°C to 120°C, and a temperature rise rate of 3°C/min.

### [Metal content (silicon content)]

The silicon content (unit ppm) of a conjugated diene-based polymer obtained in a polymerization example described below was measured through elemental analysis with inductively coupled plasma (ICP, manufactured by Shimadzu Corporation, apparatus name: ICPS-8100).

### (Deposition from polymer solution during polymerization)

The presence or absence of deposition of a polymer is confirmed when a conjugated diene-based polymer solution of each of Examples and Comparative Examples described below is set to 40°C. In a case where the polymer is deposited, white oligomer deposition is seen. A case where the polymer is deposited is described as "Present", and a case where the polymer is not deposited is described as "Absent". The absence of deposition is necessary from the viewpoint of productivity such as range clogging during production.

### (Cold flow)

The cold flow was measured at 25°C with a conjugated diene-based polymer as a specimen for measurement. A 40 mm × 40 mm × 50 mm thick (H0) specimen was placed under a load of 1 kg at 25°C and left for 60 minutes. Then, the degree of change in thickness (%) was calculated from the resulting thickness (H60) according to the following expression: Degree of change in thickness (%)= (H0 - H60) × 100 / H0

The results in Examples 1 to 18 and Comparative Examples 2 to 9 were converted into index numbers under the assumption that the results in Comparative Example 1 were 100.

A smaller index number means smaller cold flow of a rubber bale during storage and better handleability.

An index number of 79 or less was very favorable (⊚ in the tables), an index number of 80 to 99 causes no problems in practical use (O in the tables), and an index number of 100 or more was poor and causes problems in practical use (× in the tables). A sample given ⊚ and ○ is expected to have an improvement effect on cold flow.

### [Production of copolymer]

### (Preparation of hydrogenation catalyst)

A hydrogenation catalyst used for production of a copolymer in each of Examples and Comparative Examples described below was prepared by the following method.

A reaction vessel equipped with a stirrer was purged with nitrogen and charged with 1 L of cyclohexane dried and purified.

Next, 100 mmol of bis(η5-cyclopentadienyl)titanium dichloride was added thereto. While the resultant was thoroughly stirred, a n-hexane solution containing 200 mmol of trimethylaluminum was added thereto and reacted at room temperature for about 3 days to obtain a hydrogenation catalyst (T).

### (Comparative Example 1) Conjugated diene-based polymer 1

As shown in Table 1, a temperature-controllable autoclave having an inner volume of 40 L, equipped with a stirrer and a jacket, was used as a reactor, 2,880 g of 1,3-butadiene, 120 g of styrene, 21,000 g of cyclohexane, and 0.291 mol of tetrahydrofuran (THF) and 2.2 mmol of 2,2-bis(2-oxolanyl)propane as polar substances, from which impurities were removed in advance, were placed in the reactor, and the temperature in the reactor was kept at 42°C.

To the reactor was fed 14.9 mmol of n-butyllithium as a polymerization initiator.

After the initiation of polymerization reaction, the temperature in the reactor was raised due to heat generation by polymerization, and the final temperature in the reactor was 83°C. To the polymer solution was added 14.9 mmol of methanol as a reaction terminator.

To the polymer solution were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter the conjugated diene-based polymer solution was dropped into warm water to remove the solvent, and subjected to a drying treatment with a drier, and a composition of conjugated diene-based polymer 1 supplemented with the antioxidants was thus obtained.

The results of analysis on the obtained conjugated diene-based polymer 1 by the above methods are shown in Table 3.

### (Example 1) Conjugated diene-based polymer 2

As shown in Table 1, a temperature-controllable autoclave having an inner volume of 40 L, equipped with a stirrer and a jacket, was used as a reactor, 2,880 g of 1,3-butadiene, 120 g of styrene, 21,000 g of cyclohexane, and 0.291 mol of tetrahydrofuran (THF) and 3.1 mmol of 2,2-bis(2-oxolanyl)propane (BOP) as polar substances, from which impurities were removed in advance, were placed in the reactor, and the temperature in the reactor was kept at 44°C.

To the reactor was fed 23.8 mmol of n-butyllithium as a polymerization initiator.

After the initiation of polymerization reaction, the temperature in the reactor was raised due to heat generation by polymerization, and the final temperature in the reactor was 80°C. To the polymer solution was added 23.8 mmol of methanol as a reaction terminator.

One portion of the conjugated diene-based polymer solution before hydrogenation was extracted, and subjected to solvent removal by a drier, and conjugated diene-based polymer 2 before hydrogenation was obtained.

To the polymer solution before hydrogenation was added 50 ppm on a Ti basis of the hydrogenation catalyst (TC) per 100 parts by mass of the polymer before hydrogenation, and reaction was performed at a hydrogen pressure of 0.8 MPa and an average temperature of 85°C until a predetermined value of the mathematical expression (A) was attained. One portion of the conjugated diene-based polymer solution was extracted, and subjected to solvent removal by a drier, and conjugated diene-based polymer 2 was obtained.

To the obtained polymer solution were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter the conjugated diene-based polymer solution was dropped into warm water to remove the solvent, and subjected to a drying treatment with a drier, and a composition of conjugated diene-based polymer 2 supplemented with the antioxidants was thus obtained.

The results of analysis on the obtained conjugated diene-based polymer 2 by the above methods are shown in Table 3.

### (Comparative Example 2) Conjugated diene-based polymer 3

As shown in Table 1, a temperature-controllable autoclave having an inner volume of 40 L, equipped with a stirrer and a jacket, was used as a reactor, 2,880 g of 1,3-butadiene, 120 g of styrene, 21,000 g of cyclohexane, and 0.291 mol of tetrahydrofuran (THF) and 2.2 mmol of 2,2-bis(2-oxolanyl)propane (BOP) as polar substances, from which impurities were removed in advance, were placed in the reactor, and the temperature in the reactor was kept at 43°C.

To the reactor was fed 14.9 mmol of n-butyllithium as a polymerization initiator.

After the initiation of polymerization reaction, the temperature in the reactor was raised due to heat generation by polymerization, and the final temperature in the reactor was 78°C. To the polymer solution was added 12.7 mmol of 1,3-dimethyl-2-imidazolidinone (compound 1) as a modifying agent to cause reaction for 15 minutes. Then, 14.9 mmol of methanol was added as a reaction terminator.

One portion of the conjugated diene-based polymer solution before hydrogenation was extracted, and subjected to solvent removal by a drier, and conjugated diene-based polymer 3 before hydrogenation was obtained.

The obtained conjugated diene-based polymer 3 was analyzed by the above methods. The results of analysis are shown in Table 3.

To the polymer solution before hydrogenation was added 50 ppm on a Ti basis of the hydrogenation catalyst (TC) per 100 parts by mass of the polymer before hydrogenation, and reaction was performed at a hydrogen pressure of 0.8 MPa and an average temperature of 85°C until a predetermined value of the mathematical expression (A) was attained. One portion of the conjugated diene-based polymer solution was extracted, and subjected to solvent removal by a drier, and conjugated diene-based polymer 3 was obtained.

To the obtained polymer solution were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter the conjugated diene-based polymer solution was dropped into warm water to remove the solvent, and subjected to a drying treatment with a drier, and a composition of conjugated diene-based polymer 3 supplemented with the antioxidants was thus obtained.

The results of analysis on the obtained conjugated diene-based polymer 3 by the above methods are shown in Table 3.

### (Comparative Example 3) Conjugated diene-based polymer 7

Conjugated diene-based polymer 7 and a composition containing antioxidants were obtained with reference to the polymerization conditions of Comparative Example 1 except that, as shown in Table 1, the amount of addition of styrene, the amount of addition of butadiene, the amount of addition of the polymerization initiator, the amounts of addition of the polar substances, the type of the modifying agent, the amount of addition of the modifying agent, the amount of addition of the reaction terminator, and the polymerization temperature were each changed; and no hydrogenation reaction was performed.

The results of analysis on the obtained conjugated diene-based polymer 7 by the above methods are shown in Table 3.

### (Examples 2 to 15, Examples 18, 37, 38, and Comparative Examples 4 to 9 and 19) Conjugated diene-based polymers 4 to 6, 8 to 18, and 21 to 30

Each conjugated diene-based polymer (conjugated diene-based polymers 4 to 6, 8 to 18, and 21 to 30) was obtained by the same method as in Comparative Example 2 except that, as shown in Tables 1 and 2, the polymerization prescription was changed and the conditions of hydrogenation reaction were adjusted.

In Examples 2 to 4 and 11, the modifying agent used was 1,3-dimethyl-2-imidazolidinone (compound 1).

In Examples 5 to 7, 9, 10, 12 to 14, 18, 37, and 38 and Comparative Examples 4 to 9 and 19, the modifying agent used was tetraglycidyl-1,3-bisaminomethylcyclohexane (compound 2).

On the other hand, in Examples 8, 15, tetramethoxysilane (compound 3) was used instead of the modifying agent.

To each polymer solution thus obtained were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter each conjugated diene-based polymer solution was dropped into warm water to remove the solvent, and subjected to a drying treatment with a drier, and a composition of each conjugated diene-based polymer (conjugated diene-based polymers 4 to 6, 8 to 18, and 21 to 30) supplemented with the antioxidants was thus obtained.

The results of analysis on the obtained conjugated diene-based polymers 4 to 6, 8 to 18, and 21 to 30 by the above methods are shown in Table 3 or 4.

### (Examples 16 and 17) Conjugated diene-based polymers 19 and 20

Each conjugated diene-based polymer (conjugated diene-based polymers 19 and 20) was obtained by the same method as in Comparative Example 2 except that, as shown in Table 2, the polymerization prescription was changed and the conditions of hydrogenation reaction were adjusted.

In Examples 16 and 17, two types of modifying agents were used in polymerization. The order of addition of the modifying agents was the addition of compound 2 which was reacted for 5 minutes, followed by the addition of compound 1 which was reacted for 15 minutes in Example 16. The order was the addition of compound 4 which was reacted for 5 minutes, followed by the addition of compound 1 which was reacted for 15 minutes in Example 17.

To each polymer solution thus obtained were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter each conjugated diene-based polymer solution was dropped into warm water to remove the solvent, and subjected to a drying treatment with a drier, and a composition of each conjugated diene-based polymer (conjugated diene-based polymers 19 and 20) supplemented with the antioxidants was thus obtained.

The results of analysis on the obtained conjugated diene-based polymers 19 and 20 by the above methods are shown in Table 4.

### [Table 1]

**Table 1**

| | | Comparative Example 1 | Example 1 | Comparative Example 2 | Example 2 | Example 3 | Example 4 | Comparative Example 3 | Example 5 | Example 6 | Example 7 | Example 8 | Example 9 | Example 10 |
|---|---|---|---|---|---|---|---|---|---|---|---|---|---|---|
| Styrene | | 120 | 120 | 120 | 120 | 120 | 120 | 150 | 150 | 150 | 150 | 120 | 210 | 120 |
| Butadiene | | 2880 | 2880 | 2880 | 2880 | 2880 | 2880 | 2850 | 2850 | 2850 | 2850 | 2880 | 2790 | 2880 |
| n-Butyllithium | mmol | 14.9 | 23.8 | 14.9 | 23.8 | 26.2 | 29.2 | 40.6 | 44.1 | 48.1 | 58.9 | 48.0 | 40.3 | 30.9 |
| THF | mol | 0.291 | 0.291 | 0.291 | 0.291 | 0.291 | 0.291 | 0.291 | 0.291 | 0.291 | 0.291 | 0.291 | 0.291 | 0.291 |
| BOP | mmol | 2.2 | 3.1 | 2.2 | 3.1 | 3.1 | 3.5 | 1.6 | 1.3 | 1.4 | 1.2 | 4.8 | 4.4 | 3.7 |
| Modifying agent species | | - | - | Compound 1 | Compound 1 | Compound 1 | Compound 1 | Compound 2 | Compound 2 | Compound 2 | Compound 2 | Compound 3 | Compound 2 | Compound 2 |
| Amount of addition of modifying agent | mmol | 0 | 0 | 12.7 | 20.3 | 22.3 | 24.8 | 8.1 | 8.8 | 9.6 | 11.8 | 14.4 | 8.1 | 6.2 |
| Methanol | mmol | 14.9 | 23.8 | 14.9 | 23.8 | 26.2 | 29.2 | 8.1 | 8.8 | 9.6 | 11.8 | 9.6 | 8.1 | 6.2 |
| Hydrogenation catalyst | | - | TC | TC | TC | TC | TC | - | TC | TC | TC | TC | TC | TC |
| Amount of addition of hydrogenation catalyst (titanium basis) | ppm | 0 | 50 | 50 | 50 | 50 | 50 | 0 | 50 | 50 | 50 | 50 | 50 | 50 |

### [Table 2]

**Table 2**

| | | Example 11 | Example 12 | Example 13 | Example 14 | Example 15 | Example 16 | Example 17 | Example 18 | Example 37 | Example 38 | Comp. Ex. 4 | Comp. Ex. 5 | Comp. Ex. 6 | Comp. Ex. 7 | Comp. Ex. 8 | Comp. Ex. 9 | Comp. Ex. 19 |
|---|---|---|---|---|---|---|---|---|---|---|---|---|---|---|---|---|---|---|
| Styrene | | 120 | 120 | 0 | 90 | 150 | 120 | 120 | 390 | 120 | 150 | 750 | 180 | 120 | 120 | 120 | 900 | 0 |
| Butadiene | | 2880 | 2880 | 3000 | 2910 | 2850 | 2880 | 2880 | 2610 | 2880 | 2850 | 2250 | 2820 | 2880 | 2880 | 2880 | 2100 | 3000 |
| n-Butyllithium | mmol | 18.0 | 96.5 | 54.8 | 52.8 | 52.4 | 30.9 | 30.9 | 55.3 | 59.5 | 66.5 | 28.0 | 133.9 | 177.8 | 21.8 | 53.4 | 44.5 | 79.2 |
| THF | mol | 0.291 | 0.291 | 0.291 | 0.291 | 0.291 | 0.291 | 0.291 | 0.291 | 0.291 | 0.291 | 0.291 | 0.291 | 0.291 | 0.291 | 0.291 | 0.291 | 0.291 |
| BOP | mmol | 2.5 | 6.8 | 4.7 | 9.5 | 5.2 | 3.4 | 3.4 | 1.7 | 1.8 | 3.3 | 7.0 | 0.0 | 10.7 | 2.6 | 5.3 | 0.2 | 4.0 |
| Modifying agent species | | Compound 1 | Compound 2 | Compound 2 | Compound 2 | Compound 3 | Compound 1-2 | Compound 1-2 | Compound 2 | Compound 2 | Compound 2 | Compound 2 | Compound 2 | Compound 2 | Compound 2 | Compound 2 | Compound 2 | Compound 2 |
| Amount of addition of modifying agent | mmol | 14.4 | 19.3 | 12.1 | 10.6 | 11.5 | 17.0/3.1 | 17.0/3.1 | 11.0 | 10.4 | 11.6 | 5.6 | 26.8 | 35.6 | 4.4 | 10.7 | 8.9 | 13.8 |
| Methanol | mmol | 18.0 | 19.3 | 8.2 | 10.6 | 7.9 | 21.6 | 21.6 | 8.3 | 17.8 | 20.0 | 5.6 | 26.8 | 35.6 | 4.4 | 10.7 | 8.9 | 23.7 |
| Hydrogenation catalyst | | TC | TC | TC | TC | TC | TC | TC | TC | TC | TC | TC | TC | TC | TC | TC | TC | TC |
| Amount of addition of hydrogenation catalyst (titanium basis) | ppm | 50 | 50 | 50 | 50 | 50 | 50 | 50 | 50 | 50 | 50 | 50 | 50 | 50 | 50 | 50 | 50 | 50 |

The activator species in Tables 1 and 2 are as follows:
Compound 1: 1,3-dimethyl-2-imidazolidinone
Compound 2: tetraglycidyl-1,3-bisaminomethylcyclohexane
Compound 3: tetramethoxysilane
Compound 4: 2,2-dimethoxy-1-(3-trimethoxysilylpropyl)-1-aza-2-silacyclopentane

### [Table 3]

**Table 3**

| | | Comparative Example 1 | Example 1 | Comparative Example 2 | Example 2 | Example 3 | Example 4 | Comparative Example 3 | Example 5 | Example 6 | Example 7 | Example 8 | Example 9 | Example 10 |
|---|---|---|---|---|---|---|---|---|---|---|---|---|---|---|
| Conjugated diene-based polymer | | 1 | 2 | 3 | 4 | 5 | 6 | 7 | 8 | 9 | 10 | 11 | 12 | 13 |
| Styrene content | wt% | 4 | 4 | 4 | 4 | 4 | 4 | 5 | 5 | 5 | 5 | 4 | 7 | 4 |
| Styrene block content | wt% | 0.6 | 0.6 | 0.6 | 0.6 | 0.6 | 0.6 | 0.8 | 0.8 | 0.8 | 0.8 | 0.6 | 1.3 | 0.6 |
| Mathematical expression (A) | % | 0 | 76 | 38 | 72 | 90 | 93 | 0 | 49 | 68 | 82 | 72 | 66 | 77 |
| Mathematical expression (B) | % | 0 | 94 | 80 | 94 | 97 | 99 | 0 | 88 | 92 | 96 | 94 | 94 | 97 |
| Mathematical expression (C) | % | 35 | 35 | 35 | 35 | 35 | 35 | 25 | 25 | 25 | 25 | 35 | 18 | 35 |
| Mooney viscosity | | 50 | 50 | 50 | 50 | 50 | 58 | 50 | 50 | 50 | 50 | 50 | 73 | 101 |
| Heat of crystallization | J/g | 0 | 4.9 | 0 | 4.9 | 18.2 | 22.8 | 0 | 5.4 | 18.6 | 42.1 | 4.9 | 28.3 | 4.9 |
| Glass transition temperature | °C | -74 | -74 | -81 | -74 | -68 | -64 | -84 | -84 | -68 | -61 | -74 | -79 | -74 |
| Area of peak (B) | % | 0 | 0 | 7 | 7 | 7 | 7 | 78 | 78 | 78 | 78 | 80 | 80 | 80 |
| Degree of modification of peak (A) | % | 0 | 0 | 75 | 75 | 75 | 75 | 0 | 0 | 0 | 0 | 0 | 0 | 0 |
| Degree of modification of conjugated diene-based polymer | % | 0 | 0 | 75 | 75 | 73 | 70 | 78 | 78 | 78 | 78 | 0 | 80 | 80 |
| The number of peaks in GPC | | 1 | 1 | 2 | 2 | 2 | 2 | 2 | 2 | 2 | 2 | 3 | 2 | 2 |
| tanδ Peak top temperature | °C | -59 | -58 | -67 | -57 | -50 | -50 | -70 | -68 | -51 | -42 | -58 | -63 | -58 |
| Silicon content | ppm | 0 | 0 | 0 | 0 | 0 | 0 | 0 | 0 | 0 | 0 | 97 | 0 | 0 |
| Polymer deposition during polymerization | | Absent | Absent | Absent | Absent | Absent | Absent | Absent | Absent | Absent | Absent | Absent | Absent | Absent |
| Cold flow | | × | ○ | × | ○ | ○ | ○ | ○ | ○ | ⊚ | ⊚ | ⊚ | ⊚ | ⊚ |

### [Table 4]

**Table 4**

| | | Example 11 | Example 12 | Example 13 | Example 14 | Example 15 | Example 16 | Example 17 | Example 18 | Example 37 | Example 38 | Comp. Ex. 4 | Comp. Ex. 5 | Comp. Ex. 6 | Comp. Ex. 7 | Comp. Ex. 8 | Comp. Ex. 9 | Comp. Ex. 19 |
|---|---|---|---|---|---|---|---|---|---|---|---|---|---|---|---|---|---|---|
| Conjugated diene-based polymer | | 14 | 15 | 16 | 17 | 18 | 19 | 20 | 21 | 28 | 29 | 22 | 23 | 24 | 25 | 26 | 27 | 30 |
| Amount of styrene | wt% | 4 | 4 | 0 | 3 | 5 | 4 | 4 | 13 | 4 | 5 | 25 | 6 | 4 | 4 | 4 | 30 | 0 |
| Styrene block content | wt% | 0.6 | 0.6 | 0 | 0.4 | 0.6 | 0.6 | 0.6 | 1.4 | 0.4 | 0.4 | 3.4 | 2.6 | 0.6 | 0.6 | 0.6 | 2.6 | 0 |
| Mathematical expression (A) | % | 79 | 77 | 75 | 90 | 72 | 72 | 72 | 68 | 78 | 88 | 91 | 98 | 72 | 72 | 32 | 78 | 91 |
| Mathematical expression (B) | % | 97 | 97 | 93 | 95 | 94 | 94 | 94 | 92 | 98 | 99 | 96 | 99 | 94 | 94 | 85 | 99 | 99 |
| Mathematical expression (C) | % | 35 | 35 | 30 | 43 | 35 | 35 | 35 | 25 | 21 | 24 | 25 | 14 | 35 | 35 | 26 | 18 | 40 |
| Mooney viscosity | | 70 | 28 | 70 | 80 | 50 | 50 | 50 | 60 | 60 | 75 | 50 | 90 | 10 | 140 | 40 | 98 | 97 |
| Heat of crystallization | J/g | 5.1 | 4.2 | 25.7 | 2.9 | 4.9 | 4.9 | 4.9 | 15.3 | 35 | 44 | 0 | 55 | 4.9 | 4.9 | 0 | 22.7 | 17.2 |
| Glass transition temperature | °C | -74 | -74 | -64 | -61 | -74 | -74 | -74 | -61 | -63 | -61 | -45 | -46 | -74 | -74 | -86 | -43 | -56 |
| Area of peak (B) | % | 4 | 80 | 85 | 80 | 86 | 40 | 40 | 78 | 70 | 70 | 80 | 80 | 80 | 80 | 80 | 70 | 80 |
| Degree of modification of peak (A) | % | 0 | 0 | 0 | 0 | 0 | 75 | 75 | 0 | 0 | 0 | 0 | 0 | 0 | 0 | 0 | 0 | 0 |
| Degree of modification of conjugated diene-based polymer | % | 75 | 80 | 85 | 80 | 0 | 86 | 86 | 78 | 70 | 70 | 80 | 80 | 80 | 80 | 80 | 70 | 0 |
| The number of peaks in GPC | | 2 | 2 | 2 | 2 | 2 | 2 | 2 | 2 | 2 | 2 | 2 | 2 | 2 | 2 | 2 | 2 | 2 |
| tanδ Peak top temperature | °C | -58 | -56 | -44 | -43 | -58 | -57 | -59 | -51 | -50 | -48 | -28 | -31 | -58 | -58 | -71 | -25 | -37 |
| Silicon content | ppm | 0 | 0 | 0 | 0 | 145 | 0 | 79 | 0 | 0 | 0 | 0 | 0 | 0 | 0 | 0 | 0 | 97 |
| Polymer deposition during polymerization | | Absent | Absent | Absent | Absent | Absent | Absent | Absent | Absent | Absent | Absent | Absent | Present | Absent | Absent | Absent | Absent | Absent |
| Cold flow | | ○ | ○ | ⊚ | ⊚ | ⊚ | ⊚ | ⊚ | ⊚ | ⊚ | ⊚ | ⊚ | ⊚ | × | ⊚ | ⊚ | ⊚ | ⊚ |

### (Examples 19 to 36 and 39 to 40, Comparative Examples 10 to 18 and 20, and Reference Example 1)

### [Production of crosslinked product of a conjugated diene-based polymer (rubber composition)]

A rubber composition containing each rubber component (A), carbon black (B), and a crosslinker (C) was obtained according to blending conditions and a kneading method shown below with each of the conjugated diene-based polymers 1 to 30 obtained in Examples and Comparative Examples or EPDM (ethylene-propylene-diene copolymer: trade name "EP33" manufactured by JSR Corporation) as the rubber component (A).

### (Blending conditions)

### • Rubber component (A): 100 parts by mass

The amount of addition of each blending agent described below was expressed by the number of parts by mass based on 100 parts by mass of the rubber component
(A) including no softener for rubber.
   • Carbon black (trade name "Seast KH (N550)" manufactured by Tokai Carbon Co., Ltd.): 70 parts by mass
   • Anti-aging agent 1 (trade name "Nocrac MB" manufactured by Ouchi Shinko Chemical Industrial Co., Ltd.): 1.0 part by mass
   • Anti-aging agent 2 (trade name "Nocrac CD" manufactured by Ouchi Shinko Chemical Industrial Co., Ltd.): 1.0 part by mass
   • Naphthenic oil: 10 parts by mass
   • Stearic acid: 1.0 part by mass
   • Organic peroxide (dicumyl peroxide): 3.0 parts by mass

### <Kneading method>

The above materials were kneaded by the following method to obtain a rubber composition.

A sealed kneading machine (interior volume 0.3 L) equipped with a temperature control apparatus was used to knead the rubber component, filling agent (carbon black), naphthenic oil, anti-aging agents 1 and 2, and stearic acid at a filling degree of 65% and a number of rotor rotations of 30 to 50 rpm, as the first stage kneading.

The temperature of the sealed mixing machine was here controlled and a blended product at the first stage was obtained at a discharge temperature of 125 to 130°C.

After cooling, organic peroxide was added and kneaded in an open roll set at 70°C, as the second stage kneading. Thereafter, the resultant was molded and vulcanized with vulcanization press at 160°C for 20 minutes.

The rubber composition before vulcanization and the crosslinked rubber composition after vulcanization were evaluated.

Specifically, evaluation was made by the following methods. The results are shown in Tables 5 and 6.

### (Evaluation of physical properties of blended product)

Mooney viscosity of the rubber composition before vulcanization, and the tensile strength, tensile elongation, compression set, ozone resistance, and cold resistance of the crosslinked rubber composition, described below were measured.

### <Mooney viscosity of rubber composition>

The Mooney viscosity of the rubber composition before vulcanization was measured according to JIS K6300 (ISO289-1) and ISO289-4 and used as the index of processability.

The measurement temperature was 100°C. First, each specimen was preheated for 1 minute, thereafter a rotor was rotated at 2 rpm, and the torque after 4 minutes was measured and defined as the Mooney viscosity (ML₍₁₊₄₎). The measurement equipment used was a Mooney viscometer (trade name "VR1132" manufactured by Ueshima Seisakusho Co., Ltd.).

A composition ML viscosity of 160 or less has no problems in practical use, a composition ML viscosity of 150 or less is preferable, and a composition ML viscosity of 145 or less is more preferable, from the viewpoint of cohesion of the kneaded product of the blended product, the suppression of a ripping of the kneaded product, and an improvement in productivity. On the other hand, a composition ML viscosity of 40 or more has no problems in practical use, a composition ML viscosity of 50 or more is preferable, and a composition ML viscosity of 60 or more is more preferable, from the viewpoint of the suppression of adhesion.

### <Tensile strength and tensile elongation>

The tensile strength and tensile elongation of the crosslinked rubber composition after vulcanization were measured according to a tensile test method of JIS K6251

The measurement equipment used was AUTOGRAPH AGS-X manufactured by Shimadzu Corporation.

The tensile strength is preferably 12 MPa or more, more preferably 13 MPa or more, further preferably 15 MPa or more.

The tensile strength is preferably 410% or more, more preferably 420% or more, further preferably 430% or more, from the viewpoint of the prevention of chipping of crosslinked rubber.

### <Temperature retraction test>

The value of TR10 was measured in a temperature retraction test of crosslinked rubber according to JIS K6261: 2006 corresponding to ISO2921 and used as the index of cold resistance.

A value of TRIO of less than -50°C has no problems in use in cold climates, a value of TRIO of -55°C or less is preferable, a value of TRIO of -57°C or less is more preferable, and a value of TRIO of -60°C or less is particularly preferable.

From the test conditions, the value of TRIO was described as -70°C in the case of 10% or more restoration at the initiation of the test at -70°C.

### <Compression set>

The compression set after heating at 100°C for 72 hours of the crosslinked rubber composition was measured according to JIS K6262.

A compression set of 45 or less has no problems in practical use, a compression set of 30 or less is preferable, and a compression set of 25 or less is more preferable, from the viewpoint of the physical property stability and strain prevention of crosslinked rubber during long term use.

### <Heat resistance>

The crosslinked rubber composition used in the measurement of the tensile strength and the like was punched, and heated at 100°C and ordinary pressure for 72 hours, and the crosslinked rubber composition after heating was subjected to measurement of tensile strength and tensile elongation, according to a tensile test method of JIS K6251.

The product of the tensile strength and the tensile elongation of the crosslinked rubber composition after heating was calculated under the assumption that the product of the tensile strength and the tensile elongation of the crosslinked rubber composition not heated was 100.

The heat resistance tends to be less degraded by heating and more excellent as the numerical value is larger, and the heat resistance tends to be highly degraded by heating and more inferior as the numerical value is smaller.

The heat resistance was evaluated as follows: a numerical value of 95 or more and less than 105 is excellent in heat resistance, a numerical value of 90 or more and less than 95 or 110 or more and less than 115 has sufficient heat resistance in practical use, and a numerical value of less than 90 or 115 or more is inferior in heat resistance.

### <Ozone resistance>

Measurement was performed according to a static ozone degradation test described in JIS K6259-1(2015). The measurement sample used was a sample obtained by punching the crosslinked rubber composition into dumbbell No. 5 with a thickness of 2 mm and 25 mm in width × 115 mm in length. The test conditions involved 40°C, an ozone concentration of 50 pphm, and irradiation times of 24 hours, 48 hours, and 96 hours. The sample was taken out at each irradiation time and given ○ when having no cracks of 0.5 mm or more, and evaluation was continued. On the other hand, the sample was given × when having one or more cracks of 0.5 mm or more, and evaluation was discontinued.

No cracks at 24 hours have no problems in practical use, no cracks even at 48 hours are preferable, and no cracks even at 96 hours are excellent in ozone resistance.

### [Table 5]

**Table 5**

| Physical properties | | Comparative Example 10 | Example 19 | Comparative Example 11 | Example 20 | Example 21 | Example 22 | Comparative Example 12 | Example 23 | Example 24 | Example 25 | Example 26 | Example 27 | Example 28 |
|---|---|---|---|---|---|---|---|---|---|---|---|---|---|---|
| Conjugated diene-based polymer | | 1 | 2 | 3 | 4 | 5 | 6 | 7 | 8 | 9 | 10 | 11 | 12 | 13 |
| Mooney viscosity of rubber composition | | 82 | 92 | 124 | 127 | 141 | 146 | 74 | 92 | 94 | 94 | 95 | 102 | 152 |
| Tensile strength | Mpa | 15 | 19 | 16 | 18 | 21 | 27 | 17 | 18 | 20 | 23 | 18 | 28 | 21 |
| Tensile elongation | % | 425 | 452 | 420 | 413 | 428 | 445 | 414 | 420 | 427 | 442 | 428 | 435 | 435 |
| Compression set | % | 36 | 27 | 32 | 25 | 29 | 38 | 33 | 25 | 23 | 27 | 27 | 25 | 18 |
| Heat resistance | | 83 | 105 | 88 | 112 | 107 | 104 | 85 | 106 | 106 | 104 | 105 | 108 | 105 |
| Ozone resistance | 24 h | × | ○ | × | ○ | ○ | ○ | × | ○ | ○ | ○ | ○ | ○ | ○ |
| | 48 h | - | × | - | × | ○ | ○ | - | × | × | × | × | × | × |
| | 96 h | - | - | - | - | ○ | ○ | - | - | - | - | - | - | - |
| TR10 | °C | -70 | -70 | -70 | -70 | -63 | -60 | -70 | -70 | -64 | -57 | -70 | -70 | -70 |

### [Table 6]

**Table 6**

| Physical properties | | Example 29 | Example 30 | Example 31 | Example 32 | Example 33 | Example 34 | Example 35 | Example 36 | Example 39 | Example 40 | Comp. Ex. 13 | Comp. Ex. 14 | Comp. Ex. 15 | Comp. Ex. 16 | Comp. Ex. 17 | Comp. Ex. 18 | Comp. Ex. 20 | Reference Example 1 |
|---|---|---|---|---|---|---|---|---|---|---|---|---|---|---|---|---|---|---|---|
| Conjugated diene-based polymer | | 14 | 15 | 16 | 17 | 18 | 19 | 20 | 21 | 28 | 29 | 22 | 23 | 24 | 25 | 26 | 27 | 30 | - |
| Mooney viscosity of rubber composition | | 145 | 71 | 94 | 91 | 90 | 130 | 132 | 121 | 126 | 146 | 96 | 160 | 62 | 180 | 79 | 135 | 149 | 85 |
| Tensile strength | Mpa | 22 | 13 | 13 | 15 | 13 | 22 | 22 | 22 | 26 | 29 | 19 | 30 | 12 | 26 | 13 | 31 | 30 | 13 |
| Tensile elongation | % | 440 | 412 | 408 | 420 | 430 | 446 | 450 | 441 | 435 | 524 | 431 | 450 | 402 | 449 | 427 | 390 | 360 | 420 |
| Compression set | % | 15 | 40 | 23 | 41 | 34 | 20 | 19 | 36 | 20 | 33 | 53 | 26 | 46 | 14 | 29 | 41 | 40 | 50 |
| Heat resistance | | 111 | 106 | 105 | 102 | 104 | 109 | 108 | 106 | 105 | 104 | 103 | 101 | 106 | 105 | 89 | 102 | 104 | 103 |
| Ozone resistance | 24 h | ○ | ○ | ○ | ○ | ○ | ○ | ○ | ○ | ○ | ○ | ○ | ○ | ○ | ○ | × | ○ | ○ | ○ |
| | 48 h | × | × | × | ○ | × | × | × | × | × | ○ | ○ | ○ | × | × | - | × | ○ | ○ |
| | 96 h | - | - | - | × | - | - | - | - | × | × | ○ | ○ | - | - | - | × | × | ○ |
| TR10 | °C | -70 | -70 | -60 | -56 | -70 | -70 | -70 | -55 | -56 | -55 | -39 | -41 | -70 | -70 | -70 | -36 | -48 | -50 |

The conjugated diene-based polymers obtained in Examples 1 to 18, 37, and 38 and the conjugated diene-based polymer compositions or the crosslinked products of the conjugated diene-based polymers obtained in Examples 19 to 36, 39 and 40 were confirmed to have sufficient heat resistance in practical use and to be excellent in compression set and low temperature characteristics while maintaining processability, as compared with the conjugated diene-based polymers obtained in Comparative Examples 1 to 9 and 19 and the conjugated diene-based polymer compositions or the crosslinked products of the conjugated diene-based polymers obtained in Comparative Examples 10 to 18 and 20.

### Industrial Applicability

The conjugated diene-based polymer, the conjugated diene-based polymer composition, and the crosslinked product of a conjugated diene-based polymer of the present invention has industrial applicability as, for example, a material for packings, gaskets, seal materials, vibration isolation rubber, vibration insulation rubber, vibration control materials, conveyer belts, outsoles for shoes, midsoles for shoes, weather strip for automobiles, glass run, trunk lids, members for rail cars, members for aircrafts, waterproof sheets, engine mounts, air springs, rubber gloves, medical and sanitary goods, hoses for industrial and various applications, battery cases, adhesives, wire coverings, window frame rubber, rubber rollers for OA equipment, spinning, or the like, keypads, keyboard covers, hydroscopes, swimming caps, container bags, ocean-related components, interior floor materials, artificial muscle materials, and various industrial products.

## Claims

1. A conjugated diene-based polymer
satisfying the following mathematical expression (A) : 35 (%) ≤ 100*(b + d) / (a + b + c + d) ≤ 99 (%) wherein constituent molar ratios of respective structure units represented by the following structural formulas (1) to (4): 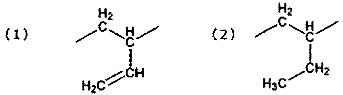 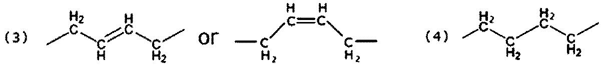 are defined as a, b, c, and d, respectively,
having a Mooney viscosity at 100°C of 25 or more and 125 or less,
having a glass transition temperature of -50°C or less measured by differential scanning calorimetry (DSC), and having a crystallization peak-derived heat of crystallization of 2.5 J/g or more and 50 J/g or less.

2. The conjugated diene-based polymer according to claim 1, wherein
the conjugated diene-based polymer comprises 1.0% by mass or more and 8.0% by mass or less of an aromatic vinyl monomer unit.

3. The conjugated diene-based polymer according to claim 1 or 2, wherein
the conjugated diene-based polymer satisfies the following mathematical expression (B): 90 (%) ≤ 100*b / (a + b) .

4. The conjugated diene-based polymer according to any one of claims 1 to 3, wherein
the conjugated diene-based polymer satisfies the following mathematical expression (C): 100*(a + b) / (a + b + c + d) < 40 (%).

5. The conjugated diene-based polymer according to any one of claims 1 to 4, wherein
the conjugated diene-based polymer has at least two peaks in a molecular weight distribution curve in gel permeation chromatography (GPC), and
when a total area of the molecular weight distribution curve is defined as 100%, an area ratio of a peak (B) having the highest molecular weight among the peaks is 10% or more and 70% or less.

6. The conjugated diene-based polymer according to any one of claims 1 to 5, wherein
the conjugated diene-based polymer has at least two peaks in a molecular weight distribution curve in gel permeation chromatography (GPC), and
a mass proportion of a modified polymer in a polymer contained in a peak (A) having the lowest molecular weight among the peaks is 50% or more.

7. The conjugated diene-based polymer according to any one of claims 1 to 6, wherein
a degree of modification is 5% or more and 99% or less.

8. The conjugated diene-based polymer according to any one of claims 1 to 7, wherein
a tanδ peak top of viscoelasticity is -85°C or more and -40°C or less.

9. The conjugated diene-based polymer according to any one of claims 1 to 8, wherein
the mathematical expression (A) is 90 (%) or less.

10. The conjugated diene-based polymer according to any one of claims 1 to 9, wherein
the mathematical expression (A) is 50 (%) or more.

11. The conjugated diene-based polymer according to any one of claims 1 to 10, wherein
a silicon content is 100 ppm or less.

12. A conjugated diene-based polymer composition comprising
100 parts by mass of the conjugated diene-based polymer according to any one of claims 1 to 11 and 10 parts by mass or more of a filling agent, wherein
the filling agent comprises one or more selected from the group consisting of a silica-based inorganic filling agent, carbon black, and calcium carbonate.

13. The conjugated diene-based polymer composition according to claim 12, wherein
the filling agent comprises at least the carbon black, and
a mass proportion of the carbon black contained in the filling agent is 30% by mass or more.

14. A crosslinked product of a conjugated diene-based polymer comprising
a vulcanized composition of the conjugated diene-based polymer composition according to claim 12 or 13 and organic peroxide.
